# EUROPEAN PATENT APPLICATION

(11) **EP 4 588 840 A1**
(43) Date of publication of application: **23.07.2025**
(21) Application number: 24153046.8
(22) Date of filing: 22.01.2024
(51) Int. Cl.: B65G 1/04, B65G 1/137

(54) **STORAGE SYSTEM**

(71) Applicant: AUTOSTORE TECHNOLOGY AS, 5578 Nedre Vats (NO)
(72) Inventor: Heggebø, Jørgen, 5578 Nedre Vats (NO)
(74) Representative: Kilburn & Strode LLP

(57) **Abstract**

A storage system (4) comprising one or more side-accessible storage columns (10), wherein each of the storage columns (io) comprises an access side (11), a side-access barrier (30, 30'), and a retractable top-access barrier (40, 40', 40"), wherein the side-access barrier (30, 30') is configured to allow access into the storage volume (ioV) from the access side (11) when open, and to prevent access into the storage volume (ioV) from the access side (11) when closed, and wherein the top-access barrier (40, 40', 40") is configured to be in an active state in which it is extended, and in an inactive state in which it is retracted, wherein the top-access barrier (40) is configured to prevent access of a lifting device (600) into the storage volume (ioV) from above when in active state, and to allow access of the lifting device (600) into the storage volume (ioV) from above when in inactive state, and wherein the top-access barrier (40, 40', 40") is configured so that, when the side-access barrier (30, 30') is able to be opened, the top-access barrier (40, 40', 40") is in the active state or the top-access barrier (40, 40', 40") is moved to the active state in response to opening the side-access barrier (30, 30').

## Description

### TECHNICAL FIELD

The present invention relates to a storage system comprising one or more side-accessible storage columns, and to an automated storage and retrieval system comprising said storage system, and to a method for providing access to a side-accessible storage column of a storage system.

### BACKGROUND

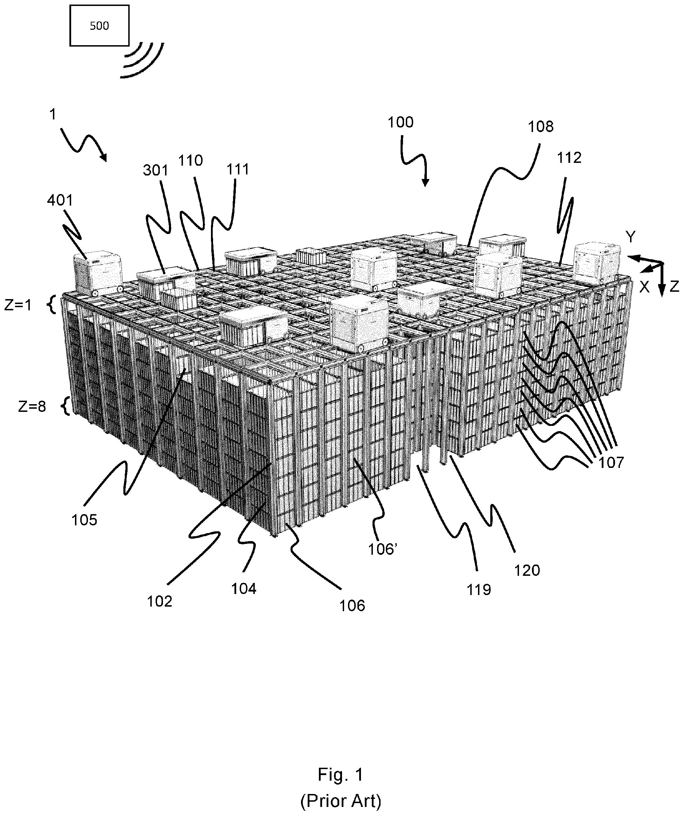

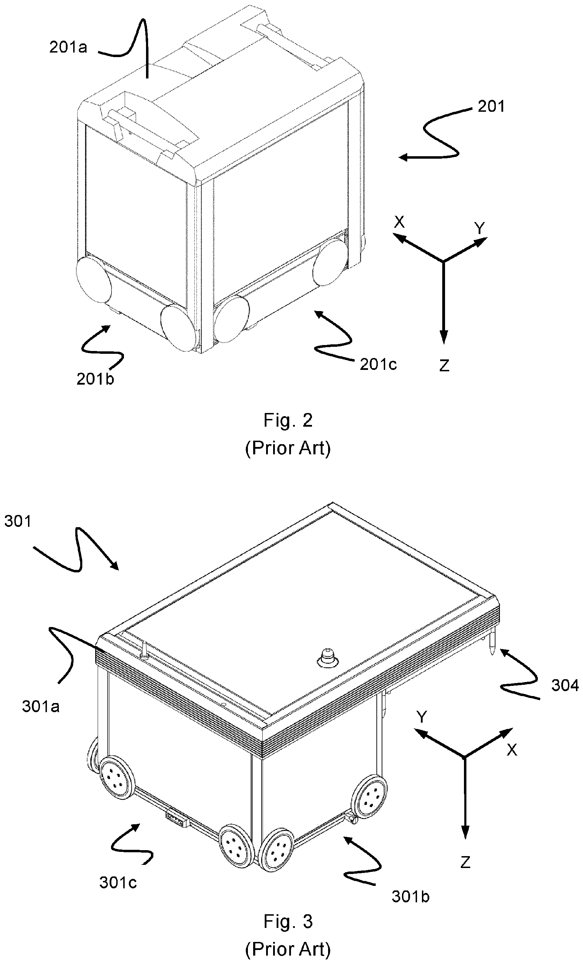

Fig. 1 discloses a prior art automated storage and retrieval system 1 with a framework structure 100 and Figs. 2, 3 and 4 disclose three different prior art container handling vehicles 201,301,401 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form stacks 107. The members 102 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 201,301,401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301,401 in a first direction X across the top of the frame structure 100, and a second set of parallel rails 111 arranged perpendicular to the first set of rails 110 to guide movement of the container handling vehicles 201,301,401 in a second direction Y which is perpendicular to the first direction X. Containers 106 stored in the columns 105 are accessed by the container handling vehicles 201,301,401 through access openings 112 in the rail system 108. The container handling vehicles 201,301,401 can move laterally above the storage columns 105, i.e. in a plane which is parallel to the horizontal X-Y plane.

The upright members 102 of the framework structure 100 may be used to guide the storage containers during raising of the containers out from and lowering of the containers into the columns 105. The stacks 107 of containers 106 are typically self-supporting.

Each prior art container handling vehicle 201,301,401 comprises a vehicle body 201a,301a,401a and first and second sets of wheels 201b, 201c, 301b, 301c,401b,401c which enable the lateral movement of the container handling vehicles 201,301,401 in the X direction and in the Y direction, respectively. In Figs. 2, 3 and 4 two wheels in each set are fully visible. The first set of wheels 201b,301b,401b is arranged to engage with two adjacent rails of the first set 110 of rails, and the second set of wheels 201c,301c,401c is arranged to engage with two adjacent rails of the second set 111 of rails. At least one of the sets of wheels 201b, 201c, 301b,301c,401b,401c can be lifted and lowered, so that the first set of wheels 201b,301b,401b and/or the second set of wheels 201c,301c,401c can be engaged with the respective set of rails 110, 111 at any one time.

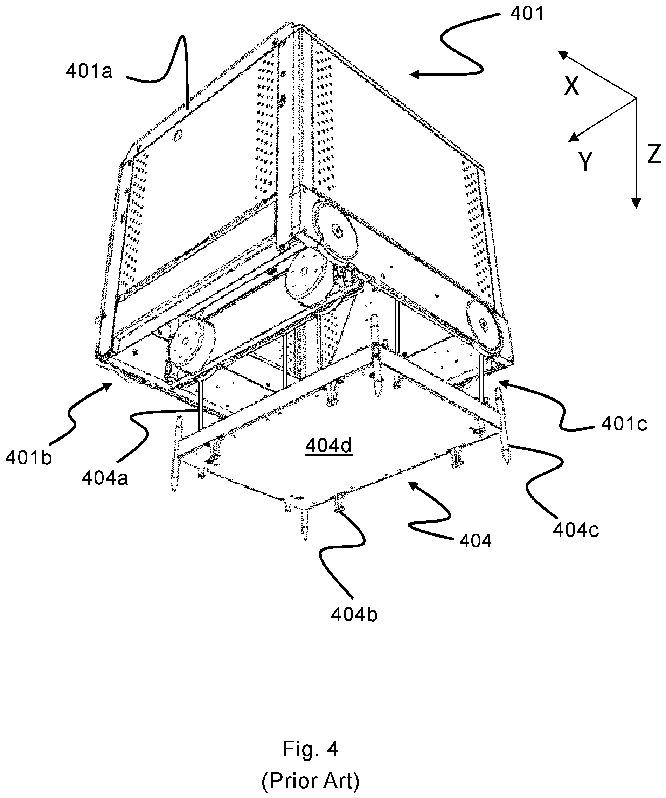

Each prior art container handling vehicle 201,301,401 also comprises a lifting device for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301,401 so that the position of the gripping / engaging devices with respect to the vehicle 201,301,401 can be adjusted in a third direction Z which is orthogonal the first direction X and the second direction Y. Parts of the gripping device of the container handling vehicles 301,401 are shown in Figs. 3 and 4 indicated with reference number 304,404. The gripping device of the container handling device 201 is located within the vehicle body 201a in Fig. 2 and is thus not shown.

Conventionally, and also for the purpose of this application, Z=1 identifies the uppermost layer available for storage containers below the rails 110,111, i.e. the layer immediately below the rail system 108, Z=2 the second layer below the rail system 108, Z=3 the third layer etc. In the exemplary prior art disclosed in Fig. 1, Z=8 identifies the lowermost, bottom layer of storage containers. Similarly, X=1...n and Y=1...n identifies the position of each storage column 105 in the horizontal plane. Consequently, as an example, and using the Cartesian coordinate system X, Y, Z indicated in Fig. 1, the storage container identified as 106' in Fig. 1 can be said to occupy storage position X=17, Y=1, Z=6. The container handling vehicles 201,301,401 can be said to travel in layer Z=o, and each storage column 105 can be identified by its X and Y coordinates. Thus, the storage containers shown in Fig. 1 extending above the rail system 108 are also said to be arranged in layer Z=0.

The storage volume of the framework structure 100 has often been referred to as a grid 104, where the possible storage positions within this grid are referred to as storage cells. Each storage column may be identified by a position in an X- and Y-direction, while each storage cell may be identified by a container number in the X-, Y- and Z-direction.

Each prior art container handling vehicle 201,301,401 comprises a storage compartment or space for receiving and stowing a storage container 106 when transporting the storage container 106 across the rail system 108. The storage space may comprise a cavity arranged internally within the vehicle body 201a,401a as shown in Figs. 2 and 4 and as described in e.g. WO2015/193278A1 and WO2019/206487A1, the contents of which are incorporated herein by reference.

Fig. 3 shows an alternative configuration of a container handling vehicle 301 with a cantilever construction. Such a vehicle is described in detail in e.g. NO317366, the contents of which are also incorporated herein by reference.

The cavity container handling vehicle 201 shown in Fig. 2 may have a footprint that covers an area with dimensions in the X and Y directions which is generally equal to the lateral extent of a storage column 105, e.g. as is described in WO2O15/193278A1, the contents of which are incorporated herein by reference. The term 'lateral' used herein may mean 'horizontal'.

Alternatively, the cavity container handling vehicles 401 may have a footprint which is larger than the lateral area defined by a storage column 105 as shown in Fig. 1 and 4, e.g. as is disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail 110,111 may comprise two parallel tracks. In other rail systems 108, each rail in one direction (e.g. an X direction) may comprise one track and each rail in the other, perpendicular direction (e.g. a Y direction) may comprise two tracks. Each rail 110,111 may also comprise two track members that are fastened together, each track member providing one of a pair of tracks provided by each rail.

WO2018/146304A1, the contents of which are incorporated herein by reference, illustrates a typical configuration of rail system 108 comprising rails and parallel tracks in both X and Y directions.

In the framework structure 100, a majority of the columns are storage columns 105, i.e. columns 105 where storage containers 106 are stored in stacks 107. In addition to storage columns 105, there are special-purpose columns within the framework structure. In Fig. 1, columns 119 and 120 are such special-purpose columns used by the container handling vehicles 201,301,401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. The transportation from the port to the access station may require movement along various different directions, by means such as delivery vehicles, trolleys or other transportation lines. Note that the term 'tilted' means transportation of storage containers 106 having a general transportation orientation somewhere between horizontal and vertical.

In Fig. 1, the first port column 119 may for example be a dedicated drop-off port column where the container handling vehicles 201,301,401 can drop off storage containers 106 to be transported to an access or a transfer station, and the second port column 120 may be a dedicated pick-up port column where the container handling vehicles 201,301,401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1, the contents of which are incorporated herein by reference.

When a storage container 106 stored in one of the columns 105 disclosed in Fig. 1 is to be accessed, one of the container handling vehicles 201,301,401 is instructed to retrieve the target storage container 106 from its position and transport it to the drop-off port column 119. This operation involves moving the container handling vehicle 201,301,401 to a location above the storage column 105 in which the target storage container 106 is positioned, retrieving the storage container 106 from the storage column 105 using the container handling vehicle's 201,301,401 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201,301,401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301,401 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301,401 positions the storage container 106 at the desired position. The removed storage containers 106 may then be lowered back into the storage column 105, or relocated to other storage columns 105.

For monitoring and controlling the automated storage and retrieval system 1, e.g. monitoring and controlling the location of respective storage containers 106 within the framework structure 100, the content of each storage container 106, and the movement of the container handling vehicles 201,301,401 so that a desired storage container 106 can be delivered to the desired location at the desired time without the container handling vehicles 201,301,401 colliding with each other, the automated storage and retrieval system 1 comprises a control system 500 which typically is computerized and which typically comprises a database for keeping track of the storage containers 106.

In many shops, replenishment of goods is mostly done by human labor, which is both time consuming and expensive. Thus, there is a potential for cost reduction and improved efficiency if replenishment of goods in a shop can be automated or at least semi-automated.

When replenishment of goods is automated in a shop, safety measures should be implemented to ensure safety of the customers, e.g. to eliminate or reduce risks related to dropped objects, hazards related to pinches or collisions etc.

WO 2023/186716 A1 discloses a storage system comprising a first structure comprising upright members, the upright members defining a volume of columns provided between the upright members. The system comprises a rail system provided on top of the upright members. A plurality of storage containers are arranged in stacks within the columns. One or more of the stacks includes a plurality of access frames, each access frame being positioned between storage containers within that stack, with a bottom of each access frame resting on an underlying storage container and a top of the access frame supporting an overlying storage container. Each access frame is configured to provide a side opening and a bottom opening to allow a person to reach an item stored in an underlying storage container by reaching in via the side opening through the bottom opening of the access frame and through the top opening of the underlying storage container, wherein the plurality of access frames are arranged in an alternating manner with consecutive storage containers, each storage container being spaced from one above by an access frame, to provide a set of accessible storage containers in that stack where access is allowed to each of the underlying storage containers in that set.

The present invention seeks to overcome or at least ameliorate to a certain extent the problems associated with the prior art.

### SUMMARY

Typically, and as described in the background section, in order to access an item stored in a container of an automated storage and retrieval system, the target storage container is retrieved from its position in a storage column and transported to a drop-off port column by a container handling vehicle. After it has been transported to the drop-off port column, typically a storage container will be conveyed to a desired destination, such as a shop (which may instead be referred to as a 'store' or a 'retail establishment') and a largely manual process will be used to distribute its contents to shelves or to other customer-accessible locations.

With the present invention, it is proposed to integrate an automated storage and retrieval system, such as of the type described in conjunction with Fig. 1, with a retail establishment. The system may be used for automatic replenishment of goods in a shop where it is desirable (or at least acceptable) to present the product items to customers in stacks of storage containers within a storage column and to allow customers to access to the items stored in the containers. The present invention enables the storage containers, and their contents, to be safely accessed by customers in a shop without the need for removing the container from its storage position in a stack and e.g. move it to a drop-off port column for picking. The present invention enables the storage containers, and their contents, to be safely accessed by customers in a shop without the need for a human or mechanical intermediary to unpack the storage containers or to redistribute the contents of the storage containers onto shelves or other display locations. Furthermore, the present invention may enable safe access to the items stored in the container without the need for using a container handling vehicle for digging or transport of the container. This is all achieved in a compact and space-efficient manner.

Thus, the present invention is set forth and characterized in the independent claims, while the dependent claims describe other characteristics of the invention.

The invention is particularly useful in a retail establishment where an automated storage and retrieval system is used to store goods, to present goods and make them accessible to customers and for automatic replenishment. The invention is also suitable for use in vertical farming where the produce may be stored in the goods holders.

In the present specification the term "goods holder" is intended to mean any goods holder unit having a bottom plate and side portions, and which is suitable for releasable connection to a lifting device, e.g. a storage container, a bin, a tote, a tray or similar. The side portions may preferably comprise gripping recesses. The side portions are preferably sidewalls. The height of the sidewalls may vary depending on the intended use of the automated storage and retrieval system and the goods to be stored. The gripping recesses may be arranged at an upper rim of the sidewalls. The outer horizontal periphery of the goods holder is preferably rectangular.

In a first aspect, there is provided a storage system comprising one or more side-accessible storage columns, each side-accessible storage column defining a storage volume for accommodating a stack of goods holders, wherein each column is configured for guiding vertical movement of the goods holders into and out of the storage column by a lifting device. Each of the storage columns comprises an access side, a side-access barrier, and a retractable top-access barrier. The side-access barrier is configured to allow access into the storage volume from the access side when open, and to prevent access into the storage volume from the access side when closed. The top-access barrier is configured to be in an active state in which it is extended, and in an inactive state in which it is retracted. The top-access barrier is configured to prevent access of the lifting device into the storage volume from above when in active state, and to allow access of the lifting device into the storage volume from above when in inactive state. The top-access barrier is configured so that, when the side-access barrier is able to be opened, the top-access barrier is in the active state or the top-access barrier is moved to the active state in response to opening the side-access barrier.

Thus, the retractable top-access barrier is configured for selectively preventing access to the stack of goods holders from above. Access from above means access for a lifting device approaching from above. Access for a lifting device may be needed for replenishing, for example to exchange an empty or near empty goods holder with another goods holder 9 filled with product items 5. In addition to preventing access for the lifting device from above, the top-access barrier also protects against falling objects from above, especially when the top-access barrier is in the form of a panel or cover, covering the top-access opening.

The top-access barrier maybe lockable in the active state to prevent unwanted moving of the barrier to the inactive state.

The storage columns may be formed by a set of upright members or vertical profiles. The upright members may be configured for guiding vertical movement of the goods holders into and out of the storage column by a lifting device. The storage volume within the side-accessible storage column is this the volume defined by the upright members up to the top-access barrier. The bottom of the storage volume is the base on which the lower most goods holder of the stack is supported from below. This may e.g. be a base of the storage column, or the base on which the upright members are supported, e.g. a floor.

The top-access barrier ensures that when a person has access to the interior of the storage column, i.e. the storage volume of the storage column, a lifting device, may not enter or access that same storage column at the same time. This is an important safety measure to minimize hazards related to dropped objects, pinch point hazards etc.

The active state may e.g. be a closed state. In the active or closed state, the top-access barrier prevents access past the top-access barrier, i.e. entrance of a lifting device or of a container handling device into the storage volume, from above is prevented. Moving the top-access barrier to active state means activating the top-access barrier. Moving the top-access barrier to active state may involve locking the top-access barrier in the active state.

The inactive state may e.g. be an open state. In the inactive or open state, the top-access barrier allows unrestricted passage of a lifting device past the top-access barrier. Moving the top-access barrier to inactive state means deactivating the top-access barrier. Moving the top-access barrier to inactive state may involve first unlocking the top-access barrier.

The side-access barrier may be a door, a panel, a roll-up barrier etc. The side-access barrier may be opened by rotational movement (swinging open the side-access barrier), or by sliding movement. Rotation may be about a vertical axis. Sliding may be horizontal (sideways) or vertical (up and down movement).

The side-accessible storage column comprises a top opening providing access into the storage volume from above. The top opening may be an access opening. The top-access barrier may close the top opening when in active state.

Each storage column may comprise four sides, which are defined by the upright members. The upright members may be elongated poles or posts, preferably arranged at respective corner positions of the column. The upright members may be walls, to form an enclosure. The side-accessible storage column may comprise one or more walls, each arranged between two corner posts.

At least one side of the storage column is the access side which comprises an access opening allowing access to the stack of goods holders, when permitted by the respective side-access barrier. The storage column may comprise more than one access side, wherein each access side is provided with a side-access barrier. The storage column may for example comprise two access sides, each provided with a side-access barrier giving selective access to the storage volume from different sides of the storage column, preferably opposite sides.

The access side may be a front side of the storage column. For example, the access side may face a walkway, aisle or other area, via which a customer or other user can move to the access side, in order to access the corresponding storage volume within the storage column. The storage column may comprise a second access side at the rear side of the storage column.

The storage column may comprise a rectangular lateral cross section and a substantially vertical height. The storage volume may extend only partway up the height of the storage column, limited by the top-access barrier.

The storage system may comprise a number of rows of spaced apart elongated upright members, the elongated upright members forming rows of storage columns for storing a stack of goods holders.

One storage column may be formed by a set of four upright members defining a rectangular storage column for storing rectangular goods holders.

The top-access barrier is located at a level above the side-access barrier, i.e. the top-access barrier is elevated in relation to the side-access barrier, at least when it is in the active state.

The side-accessible storage column may be separated from the neighboring storage columns by a wall, for preventing access between to storage columns.

The side-access barrier is preferably at least partly transparent to give customers the possibility to see the interior of the storage column.

The storage system may comprise a number of goods holders. These goods holders may be side-accessible goods holders which may be stacked directly on top of each other. The storage system may comprise a number of access frames and a number of prior art storage containers or bins comprising only a top opening, stacked in an alternating manner to provide access to the interior of the storage container or bin via the access frames.

The goods holders may comprise a top opening for accessing the interior of the goods holder from above.

The side-accessible goods holders may comprise a side-access opening allowing access the interior of the goods holders from a side of the goods holder.

The side-accessible storage columns may be arranged in one or more rows, e.g. side-by-side in each row, optionally one or more rows may comprise storage columns which are not side-accessible (e.g. used only for storage), such as the storage columns described in relation to Fig. 1.

The lifting device may me a lifting device of a container handling vehicle, a remotely operated vehicle or of a lifting arrangement such as a gantry crane. The lifting device may be lowered from the container handling vehicle or gantry crane so that the position of the first set of gripping elements with respect to the vehicle or crane can be adjusted in a direction Z which is orthogonal the plane of the rails system.

The storage system may be part of an automated storage and retrieval system as described in relation to Fig. 1.

In some embodiments, when moving the top-access barrier into its inactive state, this causes the side-access barrier to close, preventing access to the storage volume via the side access opening, and/or when moving the top-access barrier into its active state, this causes the side-access barrier to open, allowing access to the storage volume via the side access opening.

The side-access barrier and the top-access barrier may be sections of a moveable cover. The movable cover may be configured to be moved between at least a first position and a second position, wherein when in the first position the movable cover prevents access into the storage volume from the access side and allows access from above, and wherein when in the second position the movable cover allows access into the storage volume from the access side and prevents access from above.

In other words, the side-access barrier and the top-access barrier may be formed integral with one another, as respective parts of a common moveable cover.

Thus, with such movable cover, the top-access barrier will always be inactive when the side-access barrier is closed and the top-access barrier will always be active when the side-access barrier is open. In order to prevent a situation where the top-access barrier is activated (because the side-access barrier is opened) while a lifting device is operating within the storage volume, the movable cover side-access barrier may be provided with a lock for locking it in the closed state.

The moveable cover may be configured for sliding between the first and second positions. The storage column may be provided with a guiding arrangement for guiding the sliding movement of the movable cover. The guiding arrangement may e.g. comprise slots or tracks for receiving an edge of the movable cover.

The movable cover may be a movable panel.

The moveable cover may comprise multiple panel sections hinged together and configured to move vertically (up and down) along the storage column and horizontally above the storage column along a set of guides or tracks.

In some embodiments, when the top-access barrier is moved into its inactive state, the side-access barrier cannot be moved to allow access to the storage volume via the side access opening, and/or, when the top-access barrier is moved into its active state, the side-access barrier may be moveable, to allow access to the storage volume via the side access opening.

In some embodiments, when the side-access barrier is in the open state, the top-access barrier cannot be moved into its inactive state.

In some embodiments, the top-access barrier comprises a hinged gate or a sliding gate.

The gate may be a single-gate or a double-gate. The double-gate may be hinged at opposite sides of the storage volume.

The gate may take various forms such as: a single panel, a double panel, a single-arm, double-arm, protruding pins or bars, all of which may be moved to an extended position where the lateral space across the storage volume is restricted to the extent that the lifting device approaching from above may not pass, and which may be retracted to provide an opening large enough for the lifting device to pass by.

The top-access barrier may comprise an actuator configured to move the top-access barrier between the activate an inactive state. The actuator may be a linear or a rotary actuator. The actuator may be hydraulic, pneumatic or electromechanical.

The actuator may comprise a electric motor configured to provide power to the actuator.

The side-access barrier and the top-access barrier may be connected by an interlocking arrangement. The interlocking arrangement may be configured to block movement of the side-access barrier from the closed to the open state when the top-access barrier is in inactive state and to allow movement of the side-access barrier between the closed and open state when the top-access barrier is in the active state.

The side-access barrier and the top-access barrier may be connected by a interlocking arrangement, wherein the interlocking arrangement is configured to block movement of the top-access barrier into inactive state when the side-access barrier is in the open state.

The interlocking arrangement mechanically interlocks the side-access barrier and the top-access barrier.

The interlocking arrangement may comprise a first locking part arranged on or connected to the side-access barrier and a second locking part arranged on or connected to the top-access barrier. The first locking part and the second locking part may be configured to be in engagement with each other when the top-access barrier is in inactive state (e.g. opened). The first locking part may be configured to move with the side-access barrier when the side-access barrier is moved between open and closed state. The second locking part may be configured to move with the top-access barrier when the top-access barrier is moved between the active and inactive state.

In some embodiments, the second locking part may for example be moved when the top-access barrier is moved to inactive state such that the second locking part engages the first locking part and prevents the first locking part from moving such that the side-access barrier may not be opened. The interlocking arrangement may further be configured such that when the side-access barrier is opened, the first locking part is moved such that the second locking part is blocked from being moved, e.g. obstructed by the first locking part and the top-access barrier is prevented from being deactivated.

Thus, it is ensured that when the top-access barrier is deactivated (moved to inactive state), the side-access barrier is prevented from being opened and that when the side-access barrier is open, the top-access barrier is prevented from being deactivated.

The side-access barrier may comprise a lock for locking the side-access barrier in a closed state. The side-access barrier may be configured to be locked when a lifting device is operating within the storage volume.

The side-access barrier may thus be operable between a locked state in which it is not allowed to be opened, and an unlocked state in which it is able to be opened.

Locking the lock also means locking the side-access barrier. Unlocking the lock also means unlocking the side-access barrier.

In some embodiments, the top-access barrier may be moved to inactive state only when the side-access barrier is in locked state.

The top-access barrier may be configured to be in inactive state when a lifting device needs access for operating in the side-accessible storage column.

The lock may be an electronic lock, an electro-mechanical lock, or a magnetic lock which may be controlled remotely. The lock may comprise an actuator which may be powered by e.g. an electromotor.

The side-access barrier may have at least three possible states; a closed, locked state; a closed, unlocked state; and an open state. When in the closed, locked state, the side-access barrier may not be opened. When in the closed, unlocked state, the side-access barrier is able to be opened, i.e. a person may open the side-access barrier to access the interior of the storage column.

There should never be access for a lifting device below the top-access barrier in the side-accessible storage column, i.e. within the storage volume, while a person is accessing the interior of the column, i.e. while the side-access barrier is open.

The lock may be operated remotely. The lock may be controlled by a central control system, or the lock may be configured to lock or unlock the side-access barrier as a response to receiving signals from a sensor or from a container handling device comprising a lifting device.

The storage system may comprise a control system configured to control movement of the top-access barrier between the active and inactive state and/or to control locking and unlocking of the lock of the side-access barrier.

The control system may send a command to the actuator of the top-access barrier to activate or deactivate the top-access barrier.

The control system may send a command to the lock to lock or unlock the side-access barrier.

The top-access barrier is preferably active by default. The top-access barrier is preferably only deactivated when needed to provide access for a lifting device, and only as long as the side-access barrier is closed (i.e. no person is accessing the storage volume).

The side-access barrier is preferably closed and unlocked by default.

The control system may be configured to detect a status of the side-access barrier and/or to detect a status of the top-access barrier and/or to detect a status of the lock.

The status of the side-access barrier may be open or closed. The status may be detected by the control system verifying if the side-access barrier is open or closed, or e.g. by receiving input from a sensor located at the side-access barrier, e.g. a side-access barrier position sensor.

The status of the top-access barrier may be active or inactive. The status may be detected by the control system verifying if the top-access barrier is retracted or extended, or e.g. by receiving input from a sensor located at the top-access barrier, e.g. a top-access barrier position sensor.

The status of the lock may be locked or unlocked.

In some embodiments, the control system may be configured to activate the top-access barrier depending on the status of the side-access barrier. The control system may be configured to activate the top-access barrier when the side-access barrier is open and to keep it active until the side-access barrier is closed.

The control system may thus ensure that the top-access barrier is always active, preventing access for a lifting device into the storage volume, while the side-access barrier is open.

The control system may be configured to determine when a lifting device needs access to the storage volume of one of the storage columns of the system.

This may e.g. be determined based on a request from the lifting device, based on a position of the lifting device, or based on a sensor detecting the presence of a lifting device above the top-access barrier.

The control system may be configured to receive position data indicative of a position of a lifting device. If the position of the lifting device corresponds to a position proximate the top-access barrier, the control system can determine that the lifting device needs access to the storage volume below that top-access barrier.

The position of the lifting device may be a real-time position.

The control system may also detect the status of the top-access barrier, and if the top-access barrier is not in inactive state, the control system may move it to inactive state.

The control system may be configured to control locking and unlocking of the side-access barrier based on at least one of:
the status of the side-access barrier,
the status of the top-access barrier, and
whether a lifting device needs access to the storage volume of one of the storage columns.

The control system may be configured to lock the side-access barrier only when the status of the side-access barrier is closed. If the side-access barrier is open, the control system may wait for receiving a closed status of the side-access barrier and then lock the side-access barrier.

The control system may be configured to, upon determining that a lifting device needs access to the storage volume of the storage column, detect status of the side-access barrier and lock the side-access barrier when status is closed. For the first embodiment, this means that the top-access barrier is already inactive. For the second embodiment, the control system may be configured to lock the side-access barrier and then deactivate the top-access barrier.

The control system may be configured to keep the side-access barrier locked until the top-access barrier has been activated after having given access to a container lifting device.

The control system may be configured to unlock the side-access barrier only after having activated the top-access barrier or after verifying that the top-access barrier is active.

The side-access barrier is preferably unlocked by default for providing safe access for customers to the items stored in the containers in the side-accessible storage column as much of the time as possible.

The control system may thus ensure that the side-access barrier may not be opened while a lifting device is operating inside the storage volume, and that the side-access barrier may be opened as long as a lifting device is not operating inside the storage volume.

The control system may be configured to; upon receiving position data corresponding to a lifting device approaching the top-access barrier (e.g. being positioned above and in proximity to the top-access barrier), detect the status of the side-access barrier, and only if the side-access barrier is closed, deactivate the top-access barrier and lock the lock of the side-access barrier. If the side-access barrier is open, the control system may keep the top-access barrier active until status of the side-access barrier is changed to closed, and then deactivate the top-access barrier and lock the lock.

The control system may be configured to receive a request to open the top-access barrier from the lifting device or from a device comprising the lifting device, such as a container handling vehicle or a gantry crane. The request may be triggered by position data of the lifting device or by input from a sensor detecting a lifting device approaching the top-access barrier.

The control system may be configured to receive a request for deactivating the top-access barrier. The request may be triggered by position data of the lifting device or by input from the first sensor.

The control system may thus ensure that the lifting device is only permitted access to the storage volume when needed, and as long as the side-access barrier is closed and locked, i.e. no person is accessing or may access at the same time.

The storage columns may each comprise a first sensor for detecting a lifting device in proximity to the top-access barrier.

The first sensor may e.g. be a proximity sensor arranged close to and above the top-access barrier.

The sensor may be configured to communicate with the lock and/or the top-access barrier and/or the control system.

The lock may thus be configured to lock the side-access barrier in closed state upon receiving a signal from the first sensor that a lifting device is detected.

The top-access barrier may be configured to communicate with the lock to receive information on the status of the lock. The top-access barrier may be configured to move to active state only after receiving information that the side-access barrier is locked in closed state.

The top-access barrier may be configured to move to inactive state upon receiving a signal from the first sensor that a lifting device is detected.

The top-access barrier and the first sensor may be configured to communicate with each other, e.g. via radio frequency signals or by electrical signals. The first sensor may trigger the top-access barrier to move to inactive state.

The top-access barrier may be configured to be in active state as long as the first sensor is not communicating that a lifting device is detected.

The top-access barrier may be configured to move to inactive state and to remain inactive for as long as the first sensor communicates that a lifting device is detected.

The lock may be configured to be unlocked as long as the first sensor is not communicating that a lifting device is detected. Furthermore, the lock may be configured to be locked and remain locked for as long as the first sensor communicates that a lifting device is detected.

Thus, the top-access barrier may be moved to active state and the lock may be locked by local communications without the need for using a central control system.

The control system may lock the side-access barrier depending on the input from the first sensor and on the status of the side-access barrier.

If the first sensor detects a lifting device approaching the top-access barrier (e.g. being positioned above and in proximity to the top-access barrier), it may communicate this to the control system and the control system may then detect the status of the side-access barrier and lock the side-access barrier in closed state. After having locked the side-access barrier in closed state, the control system may move the top-access barrier to inactive state.

Thus, the control system may be used to ensure that the lifting device is only permitted access to the storage volume when needed, and as long as the side-access barrier is closed and locked, i.e. no person is accessing or may access at the same time.

The storage column may comprise a second sensor for detecting a lifting device being present in the storage volume, below the top-access barrier. The second sensor may be configured to communicate with the lock and/or the top-access barrier and/or the control system.

It may thus be ensured that the top-access barrier is active and/or that the side-access barrier may be opened as long as a lifting device is not operating inside the storage volume by use of local communication or by use of a central control system.

The top-access barrier may be configured to be moved to active state at a predetermined period of time after having been moved to the inactive state.

Thus, it is ensured that the top-access barrier is inactive only when needed, without the need for sensors or the like to determine whether the lifting device is present or operational inside the storage volume.

The system may comprise a fail-safe mechanism configured to move the top-access barrier to active state and to keep it active/closed for as long as the fail-safe is active, e.g. in the event of a power-outage.

The storage system may comprise at least two storage rows, each row comprising a plurality of side-accessible storage columns. The storage system may comprise a user access area between the at least two rows.

One storage row may comprise storage columns which are not side-accessible or special-purpose columns (as described in the background section) in addition to the side-accessible storage columns. These may be arranged between side-accessible storage columns.

At least one of the storage columns of the storage system may comprise two or more side-access barriers, each side-access barrier configured to allow access into the storage volume of the at least one storage column from a respective section of the access side when open, and to prevent access into the storage volume from said section of the access side when closed, and wherein the top-access barrier of the at least one storage column may be configured so that when at least one of the side-access barriers is able to be opened, the top-access barrier is in the active state.

The invention also relates to an automated storage and retrieval system comprising:
a storage system according to any of the preceding paragraphs;
a first rail system overlying the storage system;
a container handling device operable on the first rail system.

The container handling device comprises a vertically displaceable lifting device for being suspended from the container handling device, said lifting device being configured for lowering goods holders to or raising the goods holders from a storage position of the side-accessible storage column and/or for holding said goods holder while the container handling device is moving along the rails of the first rail system.

The automated storage and retrieval system may comprise a user-accessible retail section, wherein the user-accessible retail section comprises the storage system according to the above.

The storage system of the user-accessible retail section may comprise a first framework structure which may be identical to the framework structure described in relation to the system of Fig. 1.

The first rail system may be a two-dimensional rail system identical to the rail system described in relation to the system of Fig. 1.

The first rail system may comprise a first set of parallel rails and a second set of parallel rails arranged perpendicular to the first set of rails, the first and second sets of parallel rails dividing the rail system into rows of access openings.

The first rail system may be arranged across the top of the user-accessible retail section, i.e. across the top of the first framework structure.

The first set of parallel rails may be arranged to guide movement of a container handling vehicle in a first direction X across the top of the framework structure.

The second set of parallel rails may be arranged to guide movement of the container handling vehicle in a second direction Y across the top of the framework structure that is perpendicular to the first direction.

The access openings may be aligned with the side-accessible storage columns to allow the container handling vehicle to lift and lower a goods holder, which may be a side-accessible goods holder, between a position above the first rail system and a position below the first rail system. The position below the rail system may be a position in a side-accessible storage column. The container handling vehicle may be operated to transport the side-accessible goods holder(s) on the rail system.

The storage columns may each be arranged below an access opening of the rail system.

The user-accessible retail section may be connected to a storage section, the storage section being provided with a second rail system connected to the first rail system.

The system may comprise various types of storage columns. Some storage columns may be full length, i.e. extending across the full height of the framework structure from the base and up to the rails. Some storage columns may be shorter length and extend for example only partway down from the rails, not extending all the way to the base.

The side-accessible storage columns may extend partway up from the bottom of the base on which the framework structure is standing as there is typically a maximum height that customers may reach. The space above the side-accessible storage column and up to the rails may be used either for storing goods holders or may be void for fast access to the goods holders in the side-accessible storage column for the container handling vehicles.

The user-accessible retail section may thus comprise at least one row of column voids defined by a space between two rows of storage columns, which row of column voids forms the user access area.

The row of column voids provides an aisle for the customers in the access section to move between the side-accessible storage columns holding side-accessible goods holders. The row of column voids may be arranged below one or more rows of access openings.

Preferably, a row of column voids is provided below two adjacent rows of access openings.

Alternatively, below every other row of access openings is a row of column voids while below the rest of the access openings are storage columns for storing goods holders, such as side-accessible goods holders.

The column voids may extend from the bottom of the framework structure and at least partway up towards the overlying rails, for example all the way up to the rails. The voids may thus provide the necessary height of the aisle for people to walk around.

When the column void extends only partway up from the bottom of the framework structure, the space above the void and up to the rail system may efficiently be used as a storage column for storing goods holders. These storage columns thus have a length which is shorter than the full height of the first framework structure. Some of the upright members may therefore extend from the base upon where the framework structure is placed and up to the rails for providing full length storage columns, while some of the upright members may extend only partway down from the rails for providing the shorter length storage columns above the column voids.

Thus, below each access opening of the first framework structure is a column space within the footprint of the access opening, and this column space may be used for a storage column, a side-accessible storage column, a void column, or a combination of at least two of these. Some column spaces of the first framework structure may for example comprise a column void directly above the floor, and a storage column above the column void. Some column spaces of the first framework structure may for example comprise a side-accessible storage column directly above the floor and a void or a storage column above the side-accessible storage column.

The user-accessible retail section may be connected to a storage section, the storage section being provided with a second rail system connected to the first rail system for allowing transport of the side-accessible goods holder from the storage section to the user-accessible retail section on the first and second rail systems.

The container handling device may be configured to move side-accessible goods holders from the storage section to the user-accessible retail section and preferably also from the user-accessible retail section to the storage section.

Other transportation devices operable on the rail system, such as transfer vehicles without a lifting device, may be used to move the side-accessible goods holders from the storage section to the user-accessible retail section (and vice versa). A container handling device with a lifting device may then be used to lower the side-accessible goods holder into the side-accessible storage column.

The second rail system may be principally equal to the first rail system, i.e. having the same features as the first rail system, but that may be arranged over a larger or smaller area and is overlying the storage section.

The user-accessible retail section may thus be linked to the storage section by rails for passage of a container handling vehicle.

The storage section may comprise a second framework structure similar to that of Fig.1. The second framework structure of the storage section preferably comprises full length storage columns for storing goods holders. The first and second rail systems may be connected by rails allowing the container handling vehicles to drive on said rails between the storage section and the user-accessible retail section.

The storage section may for example be placed next to the user-accessible retail section, or in a different room of a warehouse building. The second rail system of the storage section should be arranged at the same height above the floor as the first rail system of the user-accessible retail section so that the first and second rail systems may be connected by rails.

A container handling vehicle may thus pick up a side-accessible goods holder in a storage column of the storage section and transport it to the user-accessible retail section, while driving on the overlying rails, where it may place the side-accessible goods holder in a side-accessible storage column. The barrier(s) may then be removed to allow customers to pick items from the side-accessible goods holder. The container handling vehicle may of course transport a goods holder the opposite way, from the user-accessible retail section to the storage section.

In some embodiments, the automated storage and retrieval systems comprises a storage section arranged above the user-accessible retail section and the first rail system is arranged across the top of the storage section, in a similar manner as the rail system of Fig. 1. The storage columns of the storage system are then aligned with the underlying storage columns of the retail section, and aligned with the access openings of the rail system.

In a second aspect, the invention relates to a method for providing access to a side-accessible storage column of a storage system according to any of the above paragraphs, the method comprising activating the top-access barrier while the side-access barrier is open.

This includes embodiments where the top-access barrier is activated in response to the side-access barrier being opened, and embodiments where the top-access barrier is active when the side-access barrier is able to be opened.

Thus, a lifting device is prevented from entering the storage volume from above at the same time as a person is accessing the storage volume from the access side, i.e. through the side-access barrier opening, thus enhancing safety for the person.

Activating the top-access barrier also means controlling the top-access barrier to be in an active state.

The method may comprise controlling the side-access barrier to be closed, preventing user access to the storage volume within the storage column, via the access side, when the barrier is in an inactive state. Controlling the side-access barrier to be closed may involve locking the side-access barrier in closed state.

The method may comprise locking the side-access barrier while a lifting device is operating within the storage volume.

Thus, it is ensured that a person may not open the side-access barrier while a lifting device is allowed to operate inside the storage volume.

In some embodiments, the method comprises locking the side-access barrier while the top-access barrier is in inactive state. The side-access barrier is preferably locked before deactivating the top-access barrier.

In some embodiments, the method comprises unlocking the side-access barrier after activating the top-access barrier.

The method may comprise detecting when a lifting device is approaching the top-access barrier and in response to this,
verifying that the side-access barrier is closed,
locking the side-access barrier, and
deactivating the top-access barrier, unless already inactive.

The step of verifying that the side-access barrier is closed may include detecting the status of the side-access barrier. If the side-access barrier is open, the system may wait for a given period of time, before status is checked again. This sequence maybe performed until the system detects that the status of the side-access barrier is closed. The control system may also be configured to terminate the planned operation by the lifting device in the storage column and reroute the lifting device to another operation, if closing of the side-access barrier does not occur within a predetermined time period.

Detection of the lifting device approaching the top-access barrier may be done for example by a proximity sensor, optical sensor or by receiving position data or a request to enter the top-access barrier from the lifting device or a container handling vehicle comprising the lifting device. The sensors may be arranged above and proximate the top-access barrier.

Verification of the status of the side-access barrier may be done by a sensor, such as a side-access barrier position sensor, e.g. a magnetic reed switch, a proximity sensor, optical sensor, or electro-mechanical switch.

The method may comprise determining when a lifting device is not present in the storage volume and in response, unlock the side-access barrier and optionally activate the top-access barrier.

With the above method, one may selectively provide access to a side-accessible storage column. The side-accessible storage column may be part of an automated storage and retrieval system according to the above paragraphs.

Determining when a lifting device is not present in the storage volume maybe done by using the same device to be used for detecting when a lifting device is approaching the top-access barrier or may be done e.g. using a second sensor. For example, when the proximity sensor sends a signal that the lifting device is no longer in proximity to the sensor, the system may determine that the lifting device is no longer present in the storage volume. Alternatively, the lifting device or a container handling device comprising the lifting device, may be configured to inform the control system or the top-access barrier when the operation within the storage column is finished.

The above described method works well for the first embodiment in the following exemplary scenarios where:
a) A customer approaches a storage column where no lifting device is currently present or operating. Before the customer opens the side-access barrier, the top-access barrier is inactive. The customer opens the side-access barrier and the top-access barrier is activated as a response to opening the side-access barrier. The top-access barrier thus ensures that a lifting device may not enter the storage volume.
b) A lifting device has received a command to retrieve a target storage container from a side-accessible storage column where a customer is currently picking items from a storage container in the same stack of storage containers as the target storage container. A proximity sensor registers the lifting device being in proximity and the system thus detects that the lifting device is approaching this specific top-access barrier. The system checks the status of the side-access barrier by receiving a signal from the side-access barrier position sensor, which indicates that the side-access barrier is open. The system checks again 3 seconds later, and the side-access barrier position sensor now indicates that the side-access barrier has been closed, which also means that the top-access barrier is inactive. The lock is locked so that the side-access barrier may not be opened while the lifting device is operating in the storage volume of the side-accessible storage column.
c) A customer approaches a storage column where a lifting device is currently operating. This means that the top-access barrier is inactive, and the side-access barrier is closed and locked. It needs to be ensured that the lifting device is finished with the operation and has moved out of the storage volume, past the top-access barrier, before it is safe for the customer to open the side-access barrier. The system may then be configured to determine when a lifting device is not present in the storage volume and in response, unlock the lock on the side-access barrier. The side-access barrier is then allowed to be opened.

The above described method works well for the second embodiment in the following scenarios where a customer approaches a storage column and wants to open the side-access barrier:
a) No lifting device is present or operating inside the storage volume of the storage column. Before the customer opens the side-access barrier, the top-access barrier is active. The customer opens the side-access barrier and the top-access barrier remains active. The top-access barrier thus ensures that a lifting device may not enter the storage volume.
b) A lifting device has received a command to retrieve a target storage container from a side-accessible storage column where a customer is currently picking items from a storage container in the same stack of storage containers as the target storage container. A proximity sensor registers the lifting device being in proximity and the system thus detects that the lifting device is approaching this specific top-access barrier. The system checks the status of the side-access barrier by receiving a signal from the side-access barrier position sensor, which indicates that the side-access barrier is open. The system checks again 3 seconds later, and the side-access barrier position sensor still indicates that the side-access barrier is open. The system checks again 3 seconds later, and the side-access barrier position sensor now indicates that the side-access barrier has been closed. The lock is locked so that the side-access barrier may not be opened, and the top-access barrier is deactivated. Thus, the side-access barrier may not be opened while the lifting device is operating in the storage volume of the side-accessible storage column.
c) A lifting device is operating inside the storage volume of the storage column, which means that the top-access barrier is inactive. It needs to be ensured that the lifting device is finished with the operation and has moved out of the storage volume, past the top-access barrier, before it is safe for the customer to open the side-access barrier. The side-access barrier is therefore locked while the top-access barrier is inactive, and when the top-access barrier is activated, after the lifting device is finished working in the storage volume, the side-access barrier may be unlocked so that the side-access barrier may be opened.

### Side-accessible goods holders

In some embodiments, the storage system comprises one or more side-accessible goods holders. The side-accessible goods holder comprises a base, a first side wall arranged on a first side of the goods holder, a second side wall arranged on a second side of the goods holder, the second side being opposite the first side, the first and second side walls extending upwardly from the base and forming a storage area for storing product items therebetween, wherein the goods holder is configured for being stacked in a stack of goods holders in a storage column of an automated storage and retrieval system and for being moved by a lifting device of the system, and
- wherein the goods holder comprises a side-access opening allowing product items to exit the storage area through the side-access opening, and
- wherein the side-access opening is configured to receive a barrier for preventing the product items from exiting the storage area through the side-access opening.

The stackable side-accessible goods holder is suitable for use in an automated storage and retrieval system wherein the product items stored in the interior of the goods holder are accessible and may be taken out of the goods holder while another goods holder is stacked on top of it, and wherein the product items stored inside the goods holder remain secured within the goods holder during handling by lifting device.

The first and second side walls of the goods holder may be at opposite sides of the base, preferably they are arranged at the periphery of the base.

The side-access opening of the goods holder may be configured for receiving the barrier, to prevent access through the side-access opening when the goods holder is being moved by the lifting device. Thus, the side-access opening may be configured to cooperate with the barrier for selectively preventing access into the storage area of the goods holder. The side access opening of the goods holder may for example comprise an outer face or an inner face suitable for having a face of the barrier placed against it to close the opening.

The side-access opening may be provided on a third side of the goods holder, which may be perpendicular to the first and/or second sides.

The side-access opening may be configured for receiving the barrier from above.

The side-access opening may comprise a barrier interface, such as tracks or slots, for receiving the barrier. The barrier interface may be configured to receive the barrier from above, allowing the barrier to slide down into a position where it prevents access into or out of the storage area through the side-access opening.

Thus, the side-accessible goods holder is configured for being in a retaining configuration and in an open-side configuration, wherein when in the retaining configuration, the side-access opening is closed by a cooperative barrier, and wherein when in the open-side configuration, access to the storage area through the side-access opening is provided.

The retaining configuration is particularly suitable for use when the goods holder is to be handled by a lifting device, such as during raising from or lowering into the storage column, or when being transported by a container handling vehicle. The barrier ensures that the items stored inside the storage area of the goods holder do not fall out through the side- access opening during these situations.

The open-side configuration is particularly suitable for use when the goods holder is stacked in a storage column and where persons should have access to the items within the goods holder. The side-access opening then allows access to the items stored in the storage area inside the goods holder and it allows removal of items from or insertion of items into the storage area through the side-access opening even while another goods holder is stacked on top of it.

Thus, the side-access opening allows product items to exit the storage area through the side-access opening while the top of the goods holder is closed, e.g. while another goods holder is stacked on top of said side-accessible goods holder.

The side-access opening may be an open side of the goods holder, or it may be an opening in a side wall of the side-accessible goods holder.

The side-accessible goods holder may comprise rectangular shape, i.e. a rectangular base. The base may thus comprise a first set of side edges and a second set of side edges, the second set of side edges being longer than the first set.

The side-accessible goods holder comprises a lower stacking interface and a complementary upper stacking interface to allow several side-accessible goods holders to be stacked on top of one another.

The base comprises a bottom face which may comprise the lower stacking interface. The base comprises a top face opposite the bottom face, which top face is the surface on which the product items may be placed. The upper stacking interface may e.g. be at the upper rim of the first and second side walls.

The first and second side walls of the goods holder may be a first set of side walls of a first length. The goods holder preferably comprises an open top or an opening in a top panel.

The side-accessible goods holder may comprise a second set of side walls of a second length. The second set of side walls may comprise one or two side walls arranged on the third and a fourth side of the goods holder. The walls of the second set may be longer than the walls of the first set.

The walls of the first and/or the second set of side walls may be arranged vertically relative to the base. The walls of first set of sidewalls may be parallel and/or the walls of the second set of side walls may be parallel. The walls of the second set of side walls may be perpendicular to the walls of the first set of side walls.

The side-accessible goods holder may comprise four side walls, wherein one of the walls comprises a side-access opening.

The side-accessible goods holder may comprise two side-access openings arranged at opposite sides of the goods holder, thus providing access from two opposite sides of a stack.

The side-access opening(s) is/are preferably provided on the third side and fourth side of the goods holder, which may be the long sides of a goods holder with a rectangular base.

The side walls comprise an inner face facing the storage area of the side-accessible goods holder, and an outer face, opposite the inner face.

The first and second side walls preferably comprises a first set of gripping structures configured to engage with corresponding gripping elements of the lifting device.

The gripping structures may be recesses arranged at an upper rim of the first and second side walls.

The side-access opening may be provided by an open side of the goods holder or by an opening in a side wall of the goods holder.

The first and second side walls of the goods holder may be the walls of the first set of side walls of a first length, and wherein the goods holder comprises a third side wall perpendicularly arranged to the first and second side walls, the third side wall having a second length.

Thus, the side-access opening may be provided by an open side of the goods holder, i.e. a side lacking a wall, opposite the third side wall. The second length may be longer than the first length.

The goods holder may comprise a fourth side wall arranged opposite the third side wall, and wherein the side-access opening is provided in the third and/or the fourth side wall.

The goods holder may thus comprise a second set of side walls comprising the third and fourth side walls. The second set of side walls may be longer than the first set of side walls. The walls of the second set of side walls may be arranged at opposite sides of the base.

The side-access opening may be a cut-out, opening or recess in the third and/or fourth side wall. The side-access opening may extend to the top opening of the goods holder.

One barrier should be provided for each side-access opening. The barriers may all be identical.

A problem with having a side-accessible goods holder in an automated storage and retrieval system is that when the goods holder is moved by a container handling device, the product items may fall out of the goods holder through the side openings. Therefore, the side-accessible goods holders herein ensures that the opening that allow access to the interior of the goods holder when placed in a stack are closed during such movement by the container handling device.

The side-accessible goods holder allows integration of a customer access point with an automated storage and retrieval system making the transition of goods from storage to retail or customer access more efficient and cost efficient as replenishment of goods can be done automatically and without the need for human labor.

The side-accessible goods holder may comprise a detachable barrier.

The lifting device may be used to attach and detach the barrier. The barrier may be permanently attached to the lifting device or it may be attachable to the lifting device to move and attach it to the side-accessible goods holder. A set of barrier gripping structures may be arranged at an upper edge or rim of the barrier, i.e. at an edge or rim configured to be on the opposite side of the barrier relative to the base when the barrier is attached to the goods holder.

The side-accessible goods holder may comprise one detachable barrier for each side-access opening.

The goods holder may comprise a retractable barrier configured to move between an retaining position on the goods holder, in which it may be received by and covers the side-access opening, and a non-retaining position on the goods holder, in which it may be retracted away from the side-access opening, to enable user access to the storage area through the side-access opening.

The retaining position on the goods holder may be an operating position. The non-retaining position on the goods holder may be a retracted position.

The barrier may be arranged as an overhead sectional barrier designed with multiple panels or sections that are hinged together.

The side-accessible goods holder may comprise guides, which may be in the form of tracks or slots, arranged in the side edges of the side-access opening and along the top of the first and second side walls, and which are configured to receive the sides of the barrier. The barrier may thus be slid along the tracks or slots between the retaining and non-retaining positions.

When the barrier is operated to be retracted, it moves upward along the guides arranged on the sides of the side-access opening and then curves to move along the guides along the top of the first and second side walls, ultimately settling substantially parallel to the top face of the goods holder when fully open.

The barrier may be arranged as a roller panel where the panel is wound, preferably around a core, which core may be a cylindrical roller tube, preferably at the top of the side-access opening. The roller panel may be of a heavy-duty flexible fabric, such as canvas.

The barrier is configured to remain within the footprint of the side-accessible goods holder in the lateral plane when in the retaining position and when in the non-retaining position, i.e. it can be removed from the side-access opening without extending outside the footprint of the side-accessible goods holder. The lateral plane may be referred to as the X-Y-plane. The base of the goods holder may be arranged in a plane parallel to the lateral plane. The non-retaining position may be a position on the goods holder or a detached position above the goods holder.

The goods holder may be provided with one or more divider walls to divide the storage area of the goods holder into compartments. When the goods holder comprises two side-access openings on two opposite sides of the goods holder, a divider wall may be arranged to provide a first compartment accessible from a first of the access openings, and a second compartment accessible from the second access opening.

When the goods holder is divided into compartments, each compartment may be provided with a side-access opening. One compartment may be closed (i.e. side-access opening covered by a barrier), while the other compartment is open (i.e. not covered by a barrier), or both may be closed or open at the same time.

The retractable barrier may comprise an activation interface configured for engagement with a cooperative activation element on the lifting device.

The activation interface may e.g. be a recess, or a protruding element configured for engaging with a cooperative activation element on the lifting device. The activation element may be configured for engaging with the activation interface and may for example be a pin for insertion in a recess or groove of the activation interface on the barrier. The activation element may alternatively be a clamping device for clamping on to a protruding element of the activation interface on the barrier. The lifting device may comprise a movable arm comprising the activation element, such that the activation element may engage with the activation interface of the barrier and move the barrier between the operating position and the retracted position by moving the arm.

The retractable barrier may thus be configured to be moved between the operating position and the retracted position by the lifting device.

The side-accessible goods holder should be designed so that the stacks of goods holders self-supporting. The goods holder may be made by a range of materials, for example plastic or metal, such as aluminum.

The lifting device may comprise a first set of gripping elements for engaging with a corresponding first set of gripping structures on the side-accessible goods holder, and a barrier configured to cover the side-access opening of the side-accessible goods holder when the gripping elements are engaged with the gripping structures on the side-accessible goods holder.

The barrier may thus be arranged on the goods holder itself, it may be a separate part attachable to the goods holder, or it may be arranged on the lifting device for engaging with the side-access opening when the lifting device is handling the goods holder.

The lifting device may comprise a lifting frame. The barrier and the first set of gripping elements may be arranged on the lifting frame. The lifting frame may be suspended from a container handling device by lifting bands.

The lifting device may then lift and lower the side-accessible goods holder by connecting the lifting frame to the first set of gripping structures and lifting or lowering the lifting frame and the goods holder using the lifting bands.

The barrier may be retractably arranged on the lifting device, preferably pivotally arranged.

The barrier may be retractably arranged on the lifting frame of the lifting device.

The lifting device may comprise one barrier for each side-access opening on the side-accessible goods holder. Thus, when the side-accessible goods holder comprises two side-access openings, e.g. at opposite sides of the base, the lifting device comprises two barriers arranged to cover these openings when the lifting device is engaged with the goods holder. The barriers may thus be arranged at opposite sides of the lifting frame.

The lifting device may comprise a detachable adapter. The barrier and the first set of gripping elements may be arranged on the adapter.

The adapter may be attachable to a lower side of the lifting frame of the lifting device. The adapter may thus be an intermediary between the lifting frame and the side-accessible goods holder. The lifting device may be configured to move a goods holder with or without the adapter attached.

The lifting frame may comprise a second set of gripping elements and the adapter may comprise a second set of gripping structures configured to engage with the second set of gripping elements on the lifting frame.

When the side-accessible goods holder comprises two side-access openings, e.g. at opposite sides of the base, the adapter comprises two barriers arranged to cover these openings when the adapter is engaged with the goods holder. The barriers may thus be arranged at opposite sides of the adapter.

The side-accessible storage column may comprise four sides of which the first side may be the access side and the second side is opposite the first side and may also be an access side. The first side may also be referred to as a front of the side-accessible storage column and the second side may be referred to as the rear side. When the side-accessible goods holder is placed in the side-accessible storage column, it shall be placed with the side-access opening facing the access side of the storage column. The third and fourth sides of the side-accessible storage column are facing neighboring columns of the framework structure, which may be other storage columns or special purpose columns. The third and fourth sides maybe provided with a wall for preventing access between to storage columns.

The barrier may be complementary shaped to the opening in a sidewall of the goods holder.

The lifting device may comprise a lifting frame. The first set of gripping elements may be arranged on the lifting frame.

The first set of gripping elements may comprise one or more gripping elements protruding downwards from a lower face of the lifting frame.

The first set of gripping elements is for releasable connection to a side-accessible goods holder.

The lifting frame may comprise a second set of gripping elements for releasable connection to a device provided with corresponding second set of gripping structures. This device may be e.g. a barrier, a goods holder or an adapter.

The barrier may be in an operating position and in a retracted position on the lifting device. In the operating position, it covers the side-access opening when the lifting device is coupled to the side-accessible goods holder. It may engage the side-access opening, e.g. be inserted into slots of the access opening, of the side-accessible goods holder. In the retracted position, it does not cover the side-access opening or engage with the side-access opening. Preferably, when in the retracted position, the barrier is located within the vertical projection of the lifting frame, and such that it does not extend out to or interfere with the first and/or second set of gripping elements, in order to not hinder engagement of the first and/or second gripping elements with the connecting structure. The lifting device may thus be used to operate on normal goods holders with four side walls using the second set of gripping elements while the barrier in the retracted position.

The adapter may comprise an adapter frame. The adapter frame may correspond in size and shape to the lifting frame. The barrier and the first set of gripping elements may be arranged and extend downwards from a lower face of the adapter frame.

The adapter may comprise a set of adapter gripping structures which may be equal to the gripping structures of the first set of gripping structures on the side-accessible goods holder. The second set of gripping elements on the lifting frame may be coupled with the adapter gripping structures or with a set of gripping structures on another structure, such as goods holder having a set of gripping structures at an upper rim of the third and fourth side walls.

Thus, the lifting device may, when not coupled with the adapter, be used to operate on goods holders with four side walls using the second set of gripping elements.

The adapter gripping structures may be arranged on the adapter frame, and may be engageable from a top face of the adapter frame.

### BRIEF DESCRIPTION OF THE DRAWINGS

The following drawings are appended to facilitate the understanding of the invention. The drawings show embodiments of the invention, which will now be described by way of example only, where:
Fig. 1 is a perspective view of a framework structure of a prior art automated storage and retrieval system.
Fig. 2 is a perspective view of a prior art container handling vehicle having an internally arranged cavity for carrying storage containers therein.
Fig. 3 is a perspective view of a prior art container handling vehicle having a cantilever for carrying storage containers underneath.
Fig. 4 is a perspective view, seen from below, of a prior art container handling vehicle having an internally arranged cavity for carrying storage containers therein.
Fig. 5a is a perspective, exploded view of a side-accessible goods holder comprising a first and a second side-access opening and comprising a first and a second detachable barrier.
Fig. 5b is a perspective view of the goods holder of Fig. 5a where the barriers are attached to and covering the side-access openings of the goods holder.
Fig. 6a is a perspective view of a side-accessible goods holder comprising a first and a second side-access opening and a first and a second retractable barrier.
Fig. 6b is a perspective view of the goods holder of Fig. 6a where the first and second barrier has been moved to a different position compared to in Fig. 6a.
Fig. 7 is a perspective view of a side-accessible goods holder comprising a first and a second side-access opening and a first and a second retractable barrier.
Fig. 8 is a perspective view of a side-accessible goods holder comprising a first and a second side-access opening and a lifting device arranged above the side-accessible goods holder, the lifting device comprising a first and a second barrier for covering the first and a second side-access opening, respectively.
Fig. 9 is a perspective view of a lifting device comprising a first and a second retractable barrier, wherein the barriers are pivoted in below the lifting frame of the lifting device and thus not visible on the figure.
Fig. 10a is a perspective view of a lifting device comprising a detachable adapter, the adapter comprising a first and a second barrier, wherein the adapter is shown in the detached state.
Fig. 10b is a perspective view of the lifting device of Fig. 10a with the adapter attached and wherein the lifting device is positioned above a side-accessible goods holder, the side-accessible goods holder comprising a first and a second side-access opening.
Fig. 10c is a perspective view of the lifting device and goods holder of Fig. 10b wherein the lifting device is lowered all the way to the goods holder so that the first and second barriers covers the first and second side-access openings, respectively.
Fig. 10d is a side view of Fig. 10c.
Fig. 11 is a perspective view of an automated storage and retrieval system comprising a storage section and a user-accessible retail section.
Fig. 12 is a perspective view of another automated storage and retrieval system comprising a user-accessible retail section with storage above.
Fig. 13 is a perspective view of a storage system according to a first embodiment of the invention comprising side-accessible storage columns with stacks of side-accessible goods holders.
Fig. 14 is a perspective view of a storage system according to a second embodiment of the invention comprising side-accessible storage columns with stacks of side-accessible goods holders.
Fig. 15a to 15c shows an embodiment of an interlocking arrangement for a side-access barrier and a top-access barrier of a side-accessible storage column.
Fig. 16 is a perspective view of an automated storage and retrieval system comprising a storage system.

### DETAILED DESCRIPTION

In the following, embodiments of the invention will be discussed in more detail with reference to the appended drawings. It should be understood, however, that the drawings are not intended to limit the invention to the subject-matter depicted in the drawings.

### Side-accessible goods holders

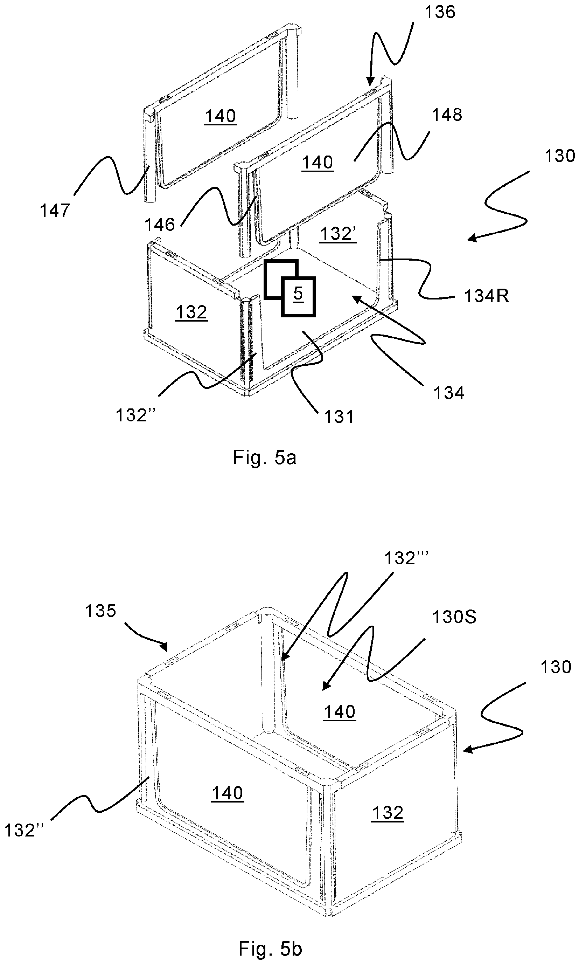

Fig. 5a is a perspective, exploded view of a side-accessible goods holder 130 comprising a first and a second side-access opening 134 and comprising a first and a second detachable barrier 140.

Fig. 5b is a perspective view of the goods holder of Fig. 5a where the barriers 140 are attached to and covering the side-access openings 134 of the goods holder 130.

The goods holder 130 comprises a rectangular base 131, a first side wall 132 arranged on a first side of the goods holder 130, a second side wall 132' arranged on a second, opposite side of the goods holder 130, a third side wall 132" on a third side of the goods holder 130, and a fourth side wall 132‴ on a fourth side of the goods holder, the fourth side being opposite the third side. The side walls 132, 132', 132", 132‴ are arranged at the periphery of the base 131. The first and second side walls are arranged on the short side edges of the base 131 and extends vertically upwards from the base 131. The third and fourth side walls 132", 132‴ are arranged on the long side edges of the base 131 and extends vertically upwards from the base 131. Thus, a storage area 130S (see Fig. 5b) is formed between the side walls 132, 132', 132", 132‴. The goods holder 130 comprises a first and a second side-access opening 134 in the third and fourth side walls 132", 132‴ of the goods holder 130, above the long side edges of the base 131. These side-access openings 134 are formed by a cut-out or recess in the side walls 132", 132‴ so that the side walls comprise only a small wall section at the bottom above the base, and a small section at each side of the opening 134 extending between the base and the top of the goods holder 130. The goods holder 130 comprises an open top.

The side-accessible goods holder 130 is to be used for storing product items 5 and for presenting the product items 5 to users, such as to customer in a retail establishment. The product items 5 may be placed on the base 131. The side-accessible goods holder 130 may be used in an automated storage and retrieval system 2, similar or identical to the one described in relation to Fig. 1. Thus, it may be transported within the system 2 by a container handling vehicle 201, 301, 401 operable on an overlying rail system 8, 108 and may be placed in a storage column 10, 105 of the system 1. The goods holder 130 is stackable with other side-accessible goods holders 130 and may also be stackable with other goods holders, such as the storage containers 106 of the prior art automated storage and retrieval system of Fig. 1. Thus, the base 131 comprises a stacking interface which allows it to be stably placed on top of another side-accessible goods holder 130, e.g. on top of the side walls 132, 132', 132", 132‴.

The side-accessible goods holder 130 comprises a first set of gripping structures 135 for allowing a lifting device 600 to grip and hold the side-accessible goods holder 130 so that the lifting device 600 may vertically move the goods holder 130, e.g. lowering or raising the goods holder 130 within a storage column 10, 105. The first set of gripping structures 135 are in the form of two recesses or slots in an upper rim of each of the first and second side walls 132, 132'. The lifting device 600 may comprise a first set of gripping elements 605 configured to engage the first set of gripping structures 135. The lifting device 600 may be a part of a container handling device, such as container handling vehicle 201, 301, 401 or a gantry crane 701.

The side-accessible goods holder 130 of Fig. 5a and 5b comprises a first and a second detachable barrier 140. The barriers 140 may be attached to the side-accessible goods holder 130 so that it covers the side-access opening 134, i.e. closing the opening to ensure that the product items 5 stored within the storage area 130S do not fall out when the side-accessible goods holder 130 is being moved, e.g. lowered or raised, by the lifting device 600. When the barriers 140 are detached and not covering the side-access openings 134, access into the storage area 130S from the third and fourth side of the side-accessible goods holder 130 is possible. The first and second barriers 140 may be detached and attached independently of each other, to allow access into the storage area 130S only from the third or the fourth side of the side-accessible goods holder 130.

The first and second detachable barriers 140 each comprises a panel 148 configured to cover the first and second side-access openings 134. The first and second detachable barriers 140 are each provided with a set of barrier gripping structures 136 which may be used to grip and hold the barrier 140 by a lifting device 600, so that the first and/or second barrier 140 may be detached from the side-accessible goods holder 130 by using the lifting device 600. The barrier gripping structures 136 may be in the form of two recesses or slots in an upper rim of each of the first and second barrier 140.The barrier gripping structures 136 may be identical to the gripping structures of the first set of gripping structures 135. The lifting device 600 may comprise a second set of gripping elements 606 configured to engage the barrier gripping structures 136. The gripping elements of the second set of gripping elements 606 may be identical to the ones of the first set of gripping elements 605.

The side-access openings 134 each comprises an interface configured for engaging a complementary interface on each of the first and second barrier 140. The periphery or outer boundary of the side-access opening 134 comprises a rim 134R. The periphery or outer boundary of the panel of the first and second barriers 140 may comprise a slot 146 for slidingly engaging with the rim 134R. Thus, the first and second barriers 140 may be slid down onto the rim 134R from above to cover the side-access opening 134. Each of the first and second barriers 140 comprises two guide posts 147 which may be used to align the barrier 140 with the side-access opening 134 and which may also provide improved connection between the barrier 140 and the goods holder 130.

The panel 148 maybe complementary shaped to the side-access opening 134. The panel 148 may have the same or a larger size than the side-access opening 134.

The panel 148 may in another example not be slidingly engaged with the side-access opening 134, but may be configured to lie against the periphery or outer boundary of the side-access opening 134 so that the opening is closed. The panel is then held against the side-access opening 134 e.g. by the posts 147 engaging a guide on the side-accessible goods holder 130.

In another example similar to that of Fig. 5a and Fig. 5b, the side-accessible goods holder 130 comprises only one side-access opening, e.g. in the third side of the goods holder 130, and only one detachable barrier 140 is needed.

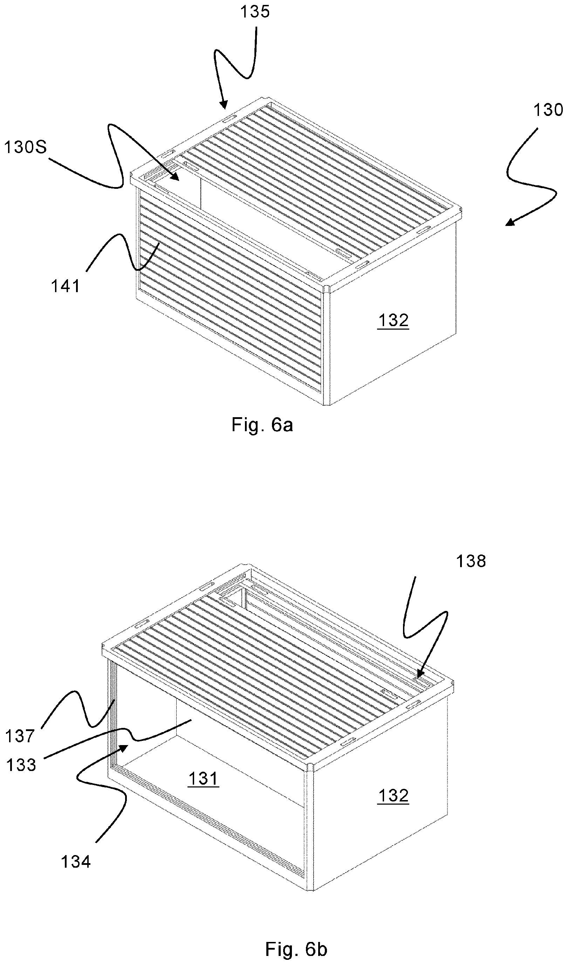

Fig. 6a and Fig. 6b are shows a side-accessible goods holder 130 comprising a first and a second side-access opening 134 and a first and a second retractable barrier 141.

The side-accessible goods holder 130 of Fig. 6a and Fig. 6b is similar to the example shown in Fig. 5a and Fig. 5b in terms of its purpose and in terms of the base 131, first and second side walls 132, 132', storage area 130S, and gripping interface 135, however, it comprises a first and a second retractable barrier 141 to cover the first and second side-access openings 134 instead of detachable barriers 140. Also, the side-access openings 134 extends all the way to the first and second side walls 132, 132' and almost all the way down to the base 131. In another example, the side-access opening 134 is smaller, and the third and fourth sides of the goods holder 130 comprises at least a section of a side wall 132", 132‴ along the vertical sides of the opening 134, similar to the example of Fig. 5a.

The barriers 141 may be moved on the side-accessible goods holder 130 between a retaining position and a non-retaining position. When in the retaining position, it covers the side-access opening 134, i.e. closes the opening 134 to ensure that the product items 5 stored within the storage area 130S do not fall out when the side-accessible goods holder 130 is being moved, e.g. lowered or raised, by the lifting device 600. When the barrier 141 is moved to the non-retaining position, i.e. moved away (retracted) and not covering the side-access openings 134, access into the storage area 130S from the third and fourth side of the side-accessible goods holder 130 is possible. The first and second barriers 141 may be moved (extended and retracted) independently of each other, to allow access into the storage area 130S only from the third or the fourth side of the side-accessible goods holder 130.

The barriers 141 comprises an inner face facing the storage area 130S, and an opposite outer face, facing the environment outside the goods holder 130. Each of the barriers 141 comprises an activation interface 138 in the form of recess or slots arranged on the outer face of the barrier 141. The lifting device 600 used to vertically move the goods holder 130 may comprise a movable arm comprising a cooperative activation element, such as a protruding pin for engaging with the recess 138 on the barrier 141 and move the barrier 141 between the retaining position, where it closes the side-access opening 134, and the non-retaining position (retracted position), where it does not close the side-access opening 134. Alternatively, the activation interface 138 is in the form of a protruding pin or element, and the activation element on the lifting device 600 is in the form of a clamping element.

In Fig. 6a, the first barrier 141 (shown in front of the goods holder) is shown in retaining position and the second barrier 141 (rear side of goods holder) is shown in non-retaining position. In Fig. 6b, the first barrier 141 (shown in front of the goods holder) is shown in non-retaining position and the second barrier 141 (rear side of goods holder) is shown in retaining position. The barrier 141 is moved along tracks or guides 137a, formed by slots, arranged at the vertical sides of the side-access opening 134, so that the barrier 141 may slide up and down over the third or fourth side of the goods holder 130, and tracks or guides 137b arranged along the horizontal sides of the top opening of the goods holder, so that the section of the barrier 141 which is moved away from the side of the goods holder 130 may be arranged over the top of the goods holder 130. This way, the barrier 141 is not blocking another goods holders 130 or storage container 106 from being stacked on top of it, and it does not extend out of the footprint of the goods holder 130 even when it is not covering the side-access opening 134.

The barriers 141 are made as overhead sectional barriers comprising multiple panels or sections that are hinged together to allow the barrier 141 to curve from covering the side of the goods holder 130 to covering the top of the goods holder 130. In another example, the barrier 141 is made of a flexible material allowing it to curve from covering the side of the goods holder 130 to covering the top of the goods holder 130.

In Fig. 6a and Fig. 6b it is also shown a divider wall 133 which divides the storage area 130S into a first and a second compartment, and where the first side-access opening 134 may provide access to the first compartment, and the second side-access 134 opening may provide access to the second compartment.

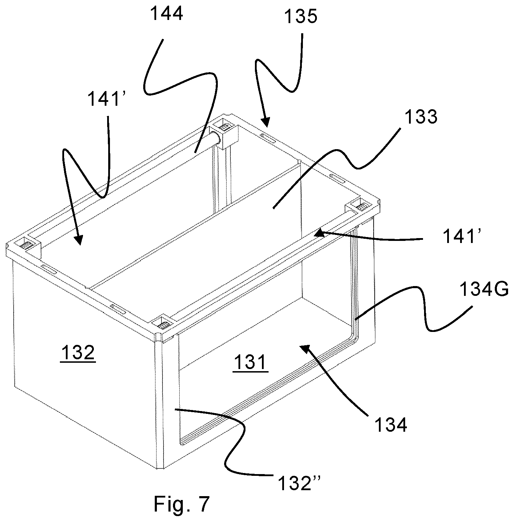

Fig. 7 is a perspective view of a side-accessible goods holder 130 comprising a first and a second side-access opening 134 and a first and a second retractable barrier 141'.

The side-accessible goods holder 130 of Fig. 7 is similar to the example shown in Fig. 6a and Fig. 6b in terms of its purpose and in terms of the base 131, first and second side walls 132, 132', storage area 130S, gripping interface 135, and having retractable barriers 141', however, the design of the retractable barriers 141' are different to the example of Fig. 6a and 6b in that the barrier is wound up when retracted, instead of slidingly retracted. Also, the side-access openings 134 comprises at least a section of a side wall 132", 132‴, similar to the example of Fig. 5a.

In Fig. 7, the first barrier 141' (located on front side of the goods holder as it is shown in the figure) is shown in a non-retaining position, i.e. not covering the first side-access opening 134, and the second barrier 141' (rear side of goods holder) is shown in retaining position, i.e. covering the second side-access opening 134.

The barriers 141' are made of a heavy-duty flexible material, such as a canvas, allowing it to be wound around a cylindrical core 144 arranged at the top of each of the side-access openings 134. When extended (unwound) to cover the side-access opening 134, the sides of the barrier 141' are guided by guides or tracks along the vertical sides of the side-access opening 134.

The periphery or outer boundary of the side-access opening 134 comprises a guide 134G in the form of a slot, for guiding the edge of the barrier 141'. The barrier 141' may comprise an edge or rim for slidingly engaging with the slot 134S. Thus, the first and second barriers 141' may be slid down along the guide 134G from above to cover the side-access opening 134.

In another example similar to that of Fig. 7, the side-accessible goods holder 130 comprises only one side-access opening 134, e.g. in the third side of the goods holder 130, and only one retractable barrier 141' is needed.

The cylindrical core may be driven by a motor to wind or unwind the barrier 141' so that the barrier 141' can move between the retaining and the non-retaining positions. The motor may be arranged on the goods holder 130, e.g. directly coupled to the core, or on the lifting device 600. Driving power may be transferred from the motor on the lifting device to the cylindrical core e.g. by a mechanical drive mechanism or it may be magnetic.

The lifting device 600 may be used to initiate or trigger the motor.

Alternatively, the first set of gripping structures 135 may be configured such that when the first set of gripping elements 605 of the lifting device 600 engages the gripping structures 135 for lifting the goods holder 130, the motor automatically unwinds the barrier 141' to move it to retaining position, and when the first set of gripping elements 605 of the lifting device 600 disengages the gripping structures 135 for leaving the goods holder 130 e.g. after it has been placed in the stack 107, the motor automatically winds up the barrier 141' to move it to the non-retaining position and provide access to the storage area 130S from the side of the goods holder 130.

Alternatively, or in addition, the cylindrical core may be spring-loaded to automatically wind (and retract) the barrier 141'. The lifting device may be used to release tension in the spring, e.g. by activating a switch.

Since the barrier 141' and the cylindrical core 144 are arranged within the goods holder 130, it may be used in a stack 107 and the barrier 141' does not extend outside the footprint of the goods holder 130 even when it is not covering the side-access opening 134.

The goods holder 130 of Fig. 7 also comprises a divider wall 133 similar to that of Fig. 6a and Fig. 6b.

### Lifting device with barrier for side-accessible goods holder

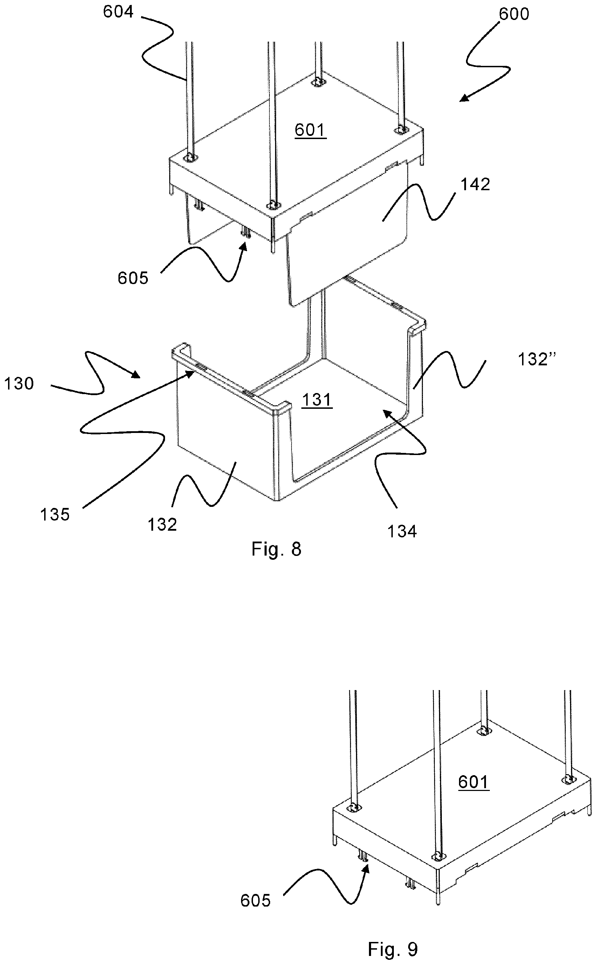

Fig. 8 is a perspective view of a side-accessible goods holder 130 comprising a first and a second side-access opening 134 and a lifting device 600 arranged above the side-accessible goods holder 130, the lifting device 600 comprising a first and a second barrier 142 for covering the first and a second side-access opening 134, respectively.

The side-accessible goods holder 130 of Fig. 8 is similar to the example shown in Fig. 5a and Fig. 5b in terms of its purpose and in terms of the base 131, the side walls 132, 132', 132", 132‴, storage area 130S, first and second side-access openings 134 and gripping interface 135, however, it does not comprise a barrier arranged on the goods holder 130 itself. Instead, the side-access openings 134 may be closed by a barrier 142 arranged on the lifting device 600.

The lifting device 600 comprises a lifting frame 601 which is suspended from a container handling device, such as a container handling vehicle 202, 301, 401 by lifting bands 604. The frame 601 has a size and shape which corresponds more or less to the size and shape of the goods holder 130. On a bottom face of the lifting frame 601, a set of first gripping elements 605 are provided. The first set of gripping elements 605 comprises two gripping elements at each of the short sides of the frame 601. These gripping elements 605 are configured for engaging the first set of gripping structures 135 of the goods holder 130. On the sides of the frame 601 which will be above the side-access openings 134 when the lifting device 600 is connected to the goods holder 130, a barrier 142 is provided. The barriers 142 are arranged on the lifting frame 601 such that when the first set of gripping elements 605 are engaged with the first set of gripping structures 135, the barriers 142 covers the side-access openings 134 so that product items 5 stores in the storage area 130S are prevented exiting through the side-access opening 134. As long as the lifting device 600 is lifted up off the goods holder 130 so that the barriers 140 are above the goods holder 130, access into the storage area 130S through the side-access opening 134 is possible.

The barriers 142 are pivotally attached at their upper edge to the bottom of the lifting frame 601 so that they can be moved between an operating position (extended), in which it may engage with and cover the side-access opening 134 by lowering the lifting frame 601 down to the goods holder 130, and a retracted position, in which it may not cover or engage with the side-access opening 134. In the retracted position, the barriers 140 are pivoted (retracted) in under the bottom of the lifting frame 601. Fig. 9 shows the lifting frame of Fig. 8 where the barriers 142 are pivoted in under the lifting frame and therefore not visible. This makes it possible to use the same lifting frame 601 for lifting other goods holders or storage containers 106 comprising four side walls and having gripping structures 135, i.e. goods holders or storage containers without side-access openings 134, since the barriers 142 are not blocking the lifting device 600 from connecting to such a goods holder or storage container using the first set of gripping elements 605 or other gripping or coupling devices.

The side-access openings 134 may comprise guides, slots or tracks 134G for receiving a rim or edge of the barrier 142. However, this is not essential because the barrier 142, when in the operating position (extended), will remain in its retaining position for as long as the first set of gripping elements 605 of the lifting device are engaged with the first set of gripping structures 135 of the goods holder 130.

When the goods holder 130 of Fig. 8 is to be picked up and moved to present the product items 5 stored inside to a customer, the lifting device 600 may be lowered towards the goods holder 130 having the barriers 140 in operating position, i.e. extending vertically downwards below the lifting frame 601. When the first set of gripping elements 605 engages the first set of gripping structures 135 of the goods holder 130, the barriers 142 will have moved all the way down to cover the entire side-access opening 134. The lifting device 600 may now lift the goods holder 130 and transport it to the target storage column 105, where it may lower the goods holder 130 and place it e.g. on top of the stack 107. Since the side-access openings 134 are covered by the barriers 142 during transport and during lifting and lowering, the product items 5 are secured inside the goods holder 130. When the lifting device 600 disengages the goods holder 130 and is moved up and away from the goods holder 130 from the stack 107, the side-access openings 134 allows the customers to access and pick items 5 from the goods holder 130.

In another example, the barriers 142 are not pivotally attached to the lifting frame 601 but are rigidly attached in operating position. In this position, the barriers 142 are arranged to extend vertically downwards from the lifting device.

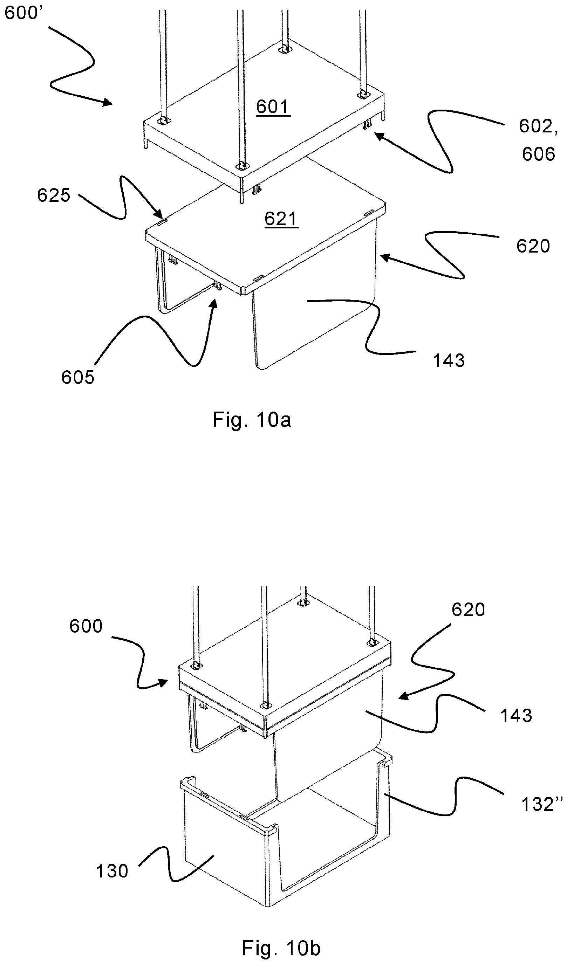

Fig. 10a is a perspective view of a lifting device 600' comprising a detachable adapter 620, the adapter 620 comprising a first and a second barrier 143, wherein the adapter 620 is shown in the detached state. In Fig. 10b the lifting device 600' of Fig. 10a is shown with the adapter 620 attached and positioned above a side-accessible goods holder 130 comprising a first and a second side-access opening 134. The adapter 620 comprises a first set of gripping elements 605, similar to those of the lifting device 600 of Fig. 8 and Fig. 9.

The lifting frame 601 comprises a set of adapter gripping elements 602 for engaging a set of adapter gripping structures 625 on an upper face of the adapter 620, so that the adapter may be attached to the lifting frame 601. The gripping elements may be arranged on a lower face of the lifting frame 601. There may be four adapter gripping elements in the set 602, two gripping elements arranged at each of the long sides of the frame 601, and they may be identical to the gripping elements of the first set 605 or the second set 606.

The set of adapter gripping structures 625 on the adapter 620 may comprise four structures and may be identical to the gripping structures of the first set of gripping structures 135 on the goods holder 130.

When the adapter 620 is attached to the lifting device 600' by engaging the set of adapter gripping elements 602 with the set of adapter gripping structures 625, it is similar to the lifting device 600 of Fig. 8 and 9 and works in the same manner. The adapter 620 may be designed to fit existing lifting devices of prior art automated storage and retrieval systems such as the lifting devices of the container handling vehicles 201, 301, 401. When the adapter 620 is detached, the lifting device 600' may be used to move goods holders or storage containers without side-access openings 134, such as a storage container 106 with four side walls. When a side-accessible goods holder 130 is to be moved, the adapter 620 may be attached to the underside of the lifting frame 601', and the lifting device 600' may be used in the same way as described for the lifting device 600 of Fig. 8 and Fig. 9.

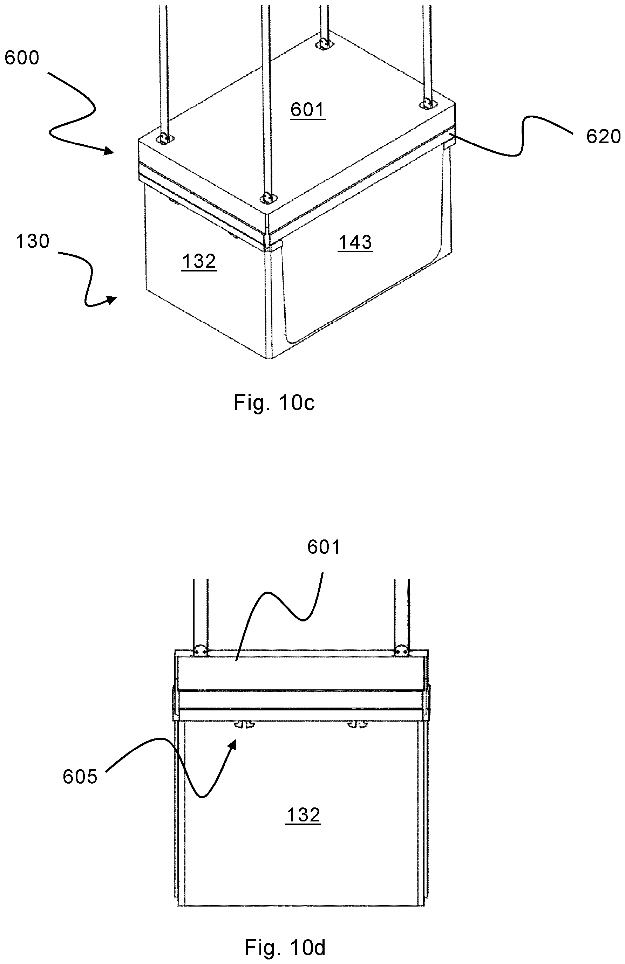

Fig. 10c shows the lifting device 600' lowered all the way to the goods holder 130 so that the first and second barriers 143 covers the first and second side-access openings 134, respectively. The first set of gripping elements 605 are engaged with the first set of gripping structures 135, which is more easily seen in the side view shown in Fig. 10d.

The side-accessible goods holder 130 is particularly useful in an automated storage and retrieval system 2, similar to that described in relation to Fig. 1 for presentation of goods and for automatic replenishment of goods in a retail establishment, such as a shop where customers walk along aisles in the shop and may see all the goods available and may pick the desired items directly from the side-accessible goods holders 130.

In all the examples, two side-access openings 134 are provided for the goods holder 130, and thus two barriers 140, 141, 141', 142, 143 are needed. In some examples, the goods holder 130 may comprise only one side-access opening 134, in which only one barrier 140, 141, 141', 142, 143 is provided.

In all the examples, the barrier 140, 141, 141', 142, 143 should have a size that is equal to or larger than the size of the side-access opening 134 to ensure that the side-access opening 134 is closed by the barrier.

### Automated storage and retrieval system with user-accessible retail section

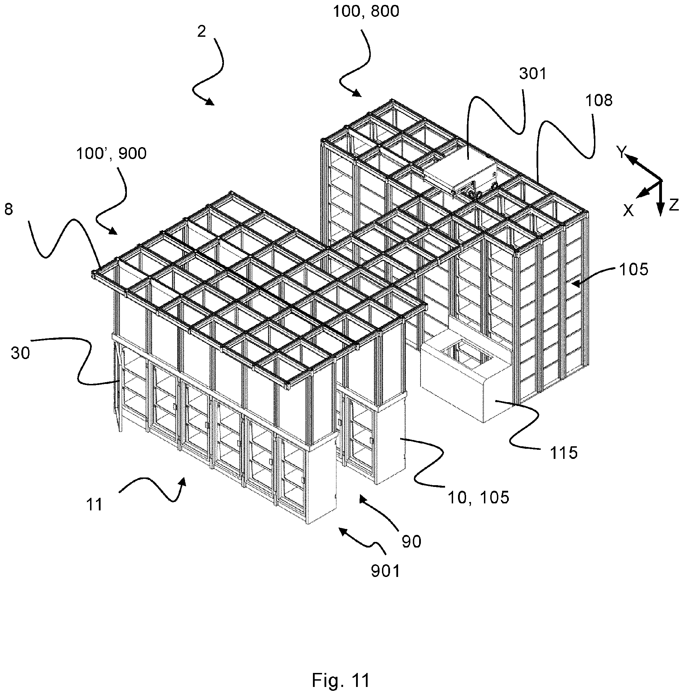

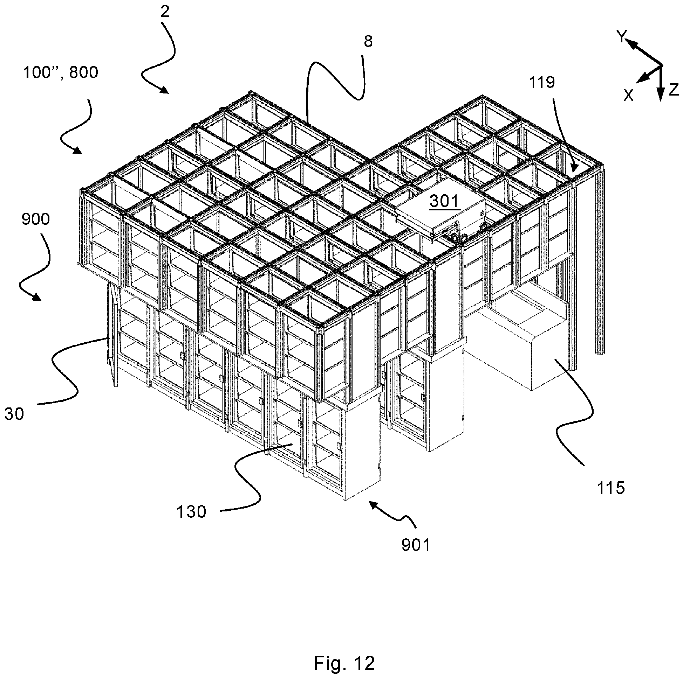

Fig. 11 and Fig. 12 shows two different examples of an automated storage and retrieval system 2 with a storage section 800 and a user-accessible retail section 900. In order to ensure safety for customers picking items from the goods holders 130, the user-accessible retail section 900 is provided with a storage system 4 where the storage columns 10 comprises a side-access barrier 30' and a top-access barrier 40', 40", as described above.

The user-accessible retail section 900 is for presenting product items 5 to users or customers and allowing them to pick product items directly from side-accessible goods holders 130. This section may thus comprise user-access areas 90, or aisles, where the customers may walk and have access to the goods holders 130 inside side-accessible storage columns 10. Above the side-accessible storage columns 10 is a rail system 8, on which a container handling vehicle 301 is operable. The retail section 900 may comprise special purpose columns, such as a transfer column.

The storage section 800 is used to store product items 5 in side-accessible goods holders 130, which goods holders 130 may be transported to the user-accessible retail section 900 by container handling devices 7. Since the goods holders, when stored in the storage section 800, are only to be accessed by container handling devices 7, the storage columns 105 may be arranged compactly, without the need for user access areas 90 between storage columns 105. Above the storage columns 105 in the storage section 800 is a rail system 8, 108, on which a container handling vehicle 301 is operable. The storage section 800 may comprise special purpose columns, such as a transfer column.

In Fig. 11 the storage section 800 and the user-accessible retail section 900 are located at different areas, e.g. different rooms of a building. Access for customers to the storage section 800 is preferably restricted. The storage section 800 may for example be separated from the user-accessible retail section 900 by walls or they may e.g. be in different buildings. The rail system 108 of the storage section 800 is connected to rail system 8 of the retail section 900 so that the container handling vehicle 301 may drive on rails between the two sections. The container handling vehicle 301 may thus transport a side-accessible goods holder 130 from the storage section 800 to the retail section 900 by driving on the rails of the rail systems 8, 108, and vice versa. Lifting and lowering of a goods holder 130 in a storage column 10, 105 may be done in the exact same manner in the storage section 800 as in the retail section 900, and in the same way as described for the prior art automated storage and retrieval system 1.

The framework structure 100 of the storage section 800 is constructed in a similar manner to the prior art framework structure 100 described above in connection with Figs. 1-3, and may even be identical to this framework structure. That is, the framework structure 100 comprises a number of upright members 102 and comprises an upper rail system 108 extending in the X direction and Y direction. The framework structure 100 further comprises storage compartments in the form of storage columns 105 provided between the members 102 wherein goods holders 106, 130 are stackable in stacks 107 within the storage columns 105. The lifting device 600 may be guided by the corners of the upright members 102. An access station 115 as described in relation to Fig. 1 may be provided and it may be arranged adjacent the storage section 800, below the rails of the rail system 8, 108.

The framework structure 100' of the retail section 900 is constructed in a similar manner to the prior art framework structure 100 described above in connection with Figs. 1-3, and may even be identical to this framework structure. That is, the framework structure 100' comprises a number of upright members 20, and comprises an upper rail system 8 extending in the X direction and Y direction. The upright members 20 maybe pillars or posts identical to the upright members 102 of the prior art framework structure shown in Fig. 1, or they may be walls. The upright members 20 may be used to guide vertical movement of the lifting device 600. The framework structure 100' of the retail section 900 further comprises storage compartments in the form of side-accessible storage columns 10 provided between the upright members 20 wherein goods holders 106, 130 are stackable in stacks 107 within the storage columns 10.

The framework structures 100, 100' can be of any size. In particular it is understood that the framework structure can be considerably wider and/or longer and/or deeper than disclosed in Fig. 1. For example, the framework structure 100, 100' may have a horizontal extent of more than 700×700 columns and a storage depth of more than twelve goods holders.

In Fig. 12 the storage section 800 is located above the user-accessible retail section 900 in a space efficient manner. The rail system 8 is arranged above the storage section 800. To provide customer access areas 90 or aisles, some storage columns 105 extend from the rails of the rail system 8 and only partway down towards the floor, so that enough space is provided below for customers to walk under these storage columns 105. The side-accessible storage columns 10 are arranged on the floor, extending partway up to the rails of the rail system 8. An access station 115 as described in relation to Fig. 1 maybe provided and it maybe arranged below overlying storage columns 105.

The framework structure 100" of the automated storage and retrieval system 2 in Fig. 12 is constructed in a similar manner to the prior art framework structure 100 described above in connection with Figs. 1-3, and may even be identical to this framework structure. That is, the framework structure 100" comprises a number of upright members 20, 102, and comprises an upper rail system 8 extending in the X direction and Y direction.

The framework structure 100" further comprises storage compartments in the form of storage columns 105 and side-accessible storage columns 10 provided between the members 20, 102 wherein goods holders 106, 130 are stackable in stacks 107 within the storage columns 10, 105.

The framework structure 100" can be of any size. In particular it is understood that the framework structure can be considerably wider and/or longer and/or deeper than disclosed in Fig. 1. For example, the framework structure 100 may have a horizontal extent of more than 700×700 columns and a storage depth of more than twelve containers.

In both Fig. 11 and Fig. 12, the side-accessible storage columns 10 are provided with a door 30' for allowing and preventing access to the stack of side-accessible goods holders 130. The door 30' may comprise a lock to lock the door 30' and thus prevent the door from being opened by a customer under certain circumstances, e.g. when a lifting device need access to a goods holder 130 in the stack 107.

It is also possible to combine storage above the user-accessible retail section and a storage section at another location.

Instead of having side-accessible goods holders 130 in the side-accessible storage columns 10 of retail section 900 in Fig. 11 and Fig. 12, the side-accessible storage columns 10 may comprise a stack of storage containers 106 with four side walls and a top opening with access frames stacked between.

The automated storage and retrieval system 2 may be configured so that the side-accessible storage columns 10 are always provided with a full stack 107 of goods holders. That is, if the storage column 10 is designed to accommodate a stack of three goods holders 9, the storage column 10 should never have less than three goods holders 9 in the stack 107. The top-access barrier 40 may be arranged as close as possible to the top of the stack 107, providing no spare volume between the top of the stack 107 and the top-access barrier 40. Thus, it may be ensured that the storage column 10 comprises only goods holders 9 (with product items 5), and possibly access frames, and no other objects or even persons, for safety reasons. Furthermore, additional sensors, e.g. a camera, may be provided to ensure that only goods holders 9 and possibly access frames are inside the storage column 10 when the door 30' is closed.

### Storage containers with access frames

The stacks may comprise goods holders which are storage containers 106 comprising a base, four side walls protruding upwardly from the base, and a top opening defined by an upper edge of the four side walls. In order to provide access into the interior of the storage containers 106 from the access side 11 as described in relation to Fig. 11, an access frame may be stacked between the storage containers 106 to create a distance between the top opening of a storage container 106 and the bottom of the above-lying container 106. The access frame comprises a side opening for facing the access side 11 and a bottom opening towards the top of the underlying storage container 106. This distance allows a person to reach an item 5 stored in an underlying container 106 by reaching his/her hand in via the side opening of the access frame, through the bottom opening of the access frame, and through the top opening of the underlying storage container 106. The access frame and the storage container 106 may be as described in WO2023/186716.

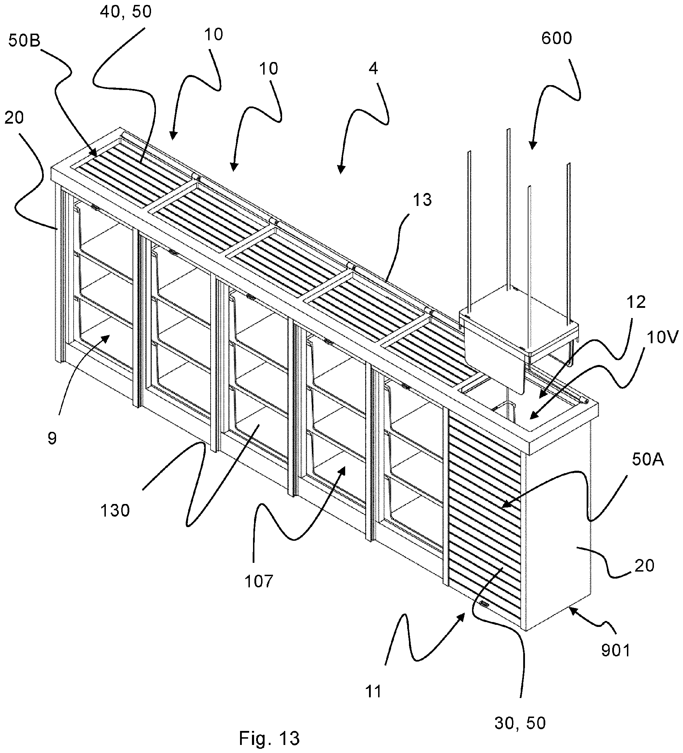

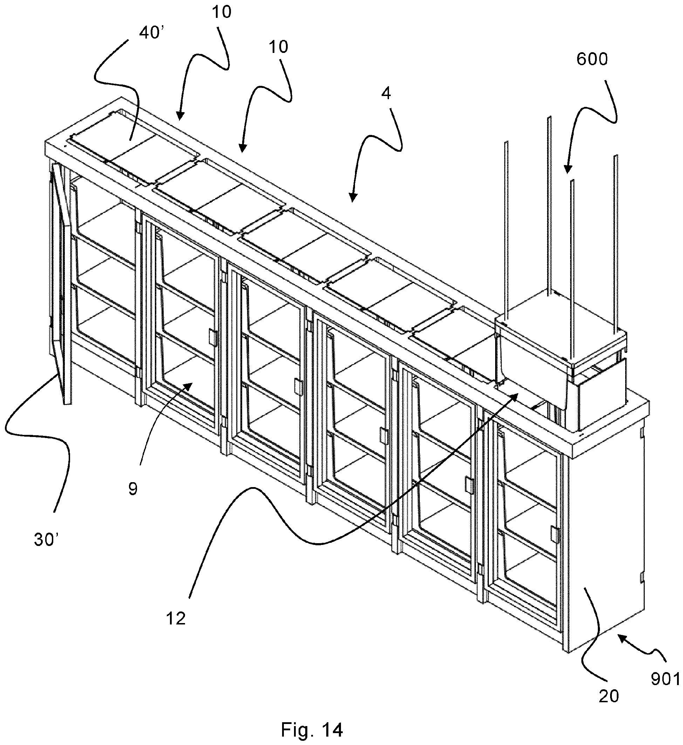

Fig. 13 and Fig. 14 show a first and a second embodiment, respectively, of a storage system 4 comprising a number of side-accessible storage columns 10 arranged in a row, each storage column 10 provided with a side-access barrier 30 and a top-access barrier 40. The side-accessible storage columns 10 is formed by upright members 20, which may e.g. be wall panels as in Fig. 13 and 14, or corner posts. The upright members 20 define a storage volume 10V within the storage column 10 where goods holders 9 may be placed on top of each other in a stack 107.

The goods holders 9, which may include those described in relation to Figs. 51 to 12, comprises product items (not shown) for presentation to users, which may be customers in a retail establishment. The side-accessible storage column 10 comprises an access side 11, which maybe a front side of the storage column 10, where a user, such as a customer, may access the storage column 10. Thus, the storage column 10 may resemble a display of a shop where each goods holder 9 presents goods that a customer may pick. The side-accessible storage column 10 may comprise two access sides 11, e.g. at the front and at the rear. The side-accessible storage column 10 also comprises a top opening 12, the top opening allowing access to the stack 107 of goods holders from above, unless restricted by the top-access barrier 40.

The stack 107 may comprise various types of goods holders 9 which either by itself provides access into its interior when placed in a stack, or which may be stacked in a manner that provides access into the interior. Thus, the goods holders 9 may for example, be side-accessible goods holders 130 according to Fig. 5-12 herein, or storage containers 106 arranged with access frames between each storage container 106 to provide a space between two storage containers 106 to allow access from the open top of the container 106. The goods holders 9 are configured for being lowered and raised within the storage column 10 by a lifting device 600, which may be a lifting device 600 of a container handling vehicle 201, 301, 401 a described in relation to Figs. 2 to 4. The upright members 20 may comprise a profile towards the storage volume 10V for guiding vertical movement of the lifting device 600. This profile may e.g. be a concave corner for guiding a convex corner or a corner post of the lifting frame 601 of the lifting device 600.

The side-access barrier 30 is generally configured to allow access into the storage volume 10V of the storage column 10 from the access side 11 when open, and to prevent access into the storage volume 10V from the access side 11 when closed.

The top-access barrier 40 is generally configured to be in an active state, in which the top-access barrier 40 is extended, and in an inactive state, in which the top-access barrier 40 is retracted. The top-access barrier 40 is configured to prevent access of a lifting device 600 into the storage volume 10V from above when in active state, and to allow access of the lifting device 600 into the storage volume 10V from above when in inactive state. Thus, the top-access barrier 40 may close the top opening 12. The top-access barrier 40 may be arranged directly above the top of the stack 107.

The system 4 may comprise fewer or more storage columns 10 in a row 901, and may also comprise several to many rows 901 of storage columns 10, as shown in Fig. 11 and Fig. 12.

A separating wall may be provided between two adjacent storage columns 10 in a row, to prevent access between two storage columns 10. Thus, a person may not reach into the storage volume 10V of a storage column 10 via the access side 11 of a neighboring storage column 10.

The storage system 4 of Fig. 13 comprises a row 901 of side-accessible storage columns 10 with stacks of goods holders 9 in the form of side-accessible goods holders 130. The system is shown with a row comprising six side-by-side storage columns 10. Three side-accessible goods holders 130 are stacked in each column 10. Each storage column 10 comprises a moveable cover 50 comprising multiple hinged panel sections allowing at least a part of the cover 50 to curve from a position adjacent the stack 107 of goods holder 9, i.e. in front of the access side 11, to an overhead position above the stack 107 of goods holders 9.

In this first embodiment, the side-access barrier 30 and the top-access barrier 40 are formed integral with one another as parts of the moveable cover 50.

The movable cover 50 is configured to be moved between at least a first position 50A and a second position 50B. When in the first position 50A the movable cover 50 prevents access into the storage volume 10V from the access side 11 and allows access into the storage volume 10V from above. When in the second position 50B the movable cover 50 allows access into the storage volume 10V from the access side 11 and prevents access into the storage volume 10V from above.

Thus, when in the first position 50A, the movable cover 50 covers the access side 11 and does not cover the top opening 12. When in the second position 50B, the movable cover 50 does not cover the access side 11 and covers the top opening 12.

The moveable cover 50 is arranged to slide up and down along the access side 11 of the side-accessible storage column 10, and to slide forwards and backwards across the top opening 12 of the column 10. For example, the upright members 20 at each side of the access side 11 may comprise guides, such as tracks or slots, for guiding the sliding movement of the movable cover 50. Likewise, guides may be arranged across the top opening 12.

When the side-access barrier 30 is opened, i.e. moving the cover 50 from the first position 50A to the second position 50B, the top-access barrier 40 is activated in response, i.e. the top opening 12 is covered by the cover 50 and preventing access for a lifting device 600 from above.

In Fig. 13, the storage column 10 of the outer right position of the row is shown with the moveable cover 50 in the first position 50A, i.e. the side-access barrier 30 is closed, and the top-access barrier 40 is in inactive state. The lifting device 600 above the storage column 10 is therefore allowed to enter through the top opening 12 and at the same time, a user may not access the storage volume 10V via the access side 11.

Furthermore, the five storage columns 10 to the left in the row of Fig. 13 are shown with the movable cover 50 in the second position 50B, i.e. the side-access barrier 30 is open and the top-access barrier 40 is in the active state, covering the top opening 12 so that a lifting device 600 may not enter the storage volume 10V from above. A user may then safely pick items out of the side-accessible goods holders 130 of the stack 107 in the storage volume 10V as no lifting device 600 is operating within the storage volume 10V at the same time.

The height of the storage column 10 which the side-access barrier 30 needs to cover is larger than the distance across the top opening 12 which the top-access barrier 40 needs to cover. Thus, when the cover 50 is moved to the second position 50B, not covering the access side 11, the part of the cover 50 which was at the top in front of the access side 11 in the first position 50A, may be wound up around a core 13 arranged at the rear of the top opening 12, as shown in Fig. 13. This allows for the storage column 10 to have a second access side 11' at an opposite side of the first access side 11, and which may be provided with a second moveable cover 50. The guide at the top opening 12 for the second cover 50 may be arranged above or below the guide for the first movable cover 50 to not interfere with each other. Alternatively, the movable cover 50 may be arranged to curve and slide down the side opposite the access side 11.

The cover 50 may be lockable in the first position 50A to prevent it from being moved so that the side-access barrier 30 is opened while a lifting device 600 is already operating inside the storage volume 10V. The cover 50 may be also lockable in the second position 50B to ensure that a lifting device 600 is prevented from accessing the storage volume 10V.

The cover 50 may be configured to automatically return to the first position 50A after having been moved away from the first position 50A, e.g. using gravity, a spring mechanism or an electric motor.

The cover 50 may be driven by an electric motor to move the cover 50 between the first position 50A and the second position 50B. For example, a user/customer may operate the cover 50 by pushing buttons arranged on the access side 11, and this may be overruled by a central control system 500 in the event that a lifting device 600 needs access to the storage volume 10V.

The storage system 4 of Fig. 14 comprises a row of side-accessible storage columns 10 with stacks of side-accessible goods holders 130. The system is shown with six side-by-side storage columns 10. Three side-accessible goods holders 130 are stacked in each column 10. Each storage column 10 comprises a side-access barrier 30 in the form of a hinged door 30', and a top-access barrier 40 in the form of a set of two pivotable top covers 40'. The top covers 40' may be panels and may cover approximately half of the top opening 12 each.

The hinged door 30' is arranged to cover the access side 12 so that access into the storage volume 10V from the access side 11 is prevented when the door 30' is closed, and access is allowed when the door 30' is open.

The top covers 40' are arranged at the top opening 12 so that they may prevent access for a lifting device 600 to the storage volume 10V via the top opening 12. The top covers 40' are arranged at a level above the door 30' and are each pivotally connected, e.g. to the walls or a frame at the top opening 12 of the storage column 10.

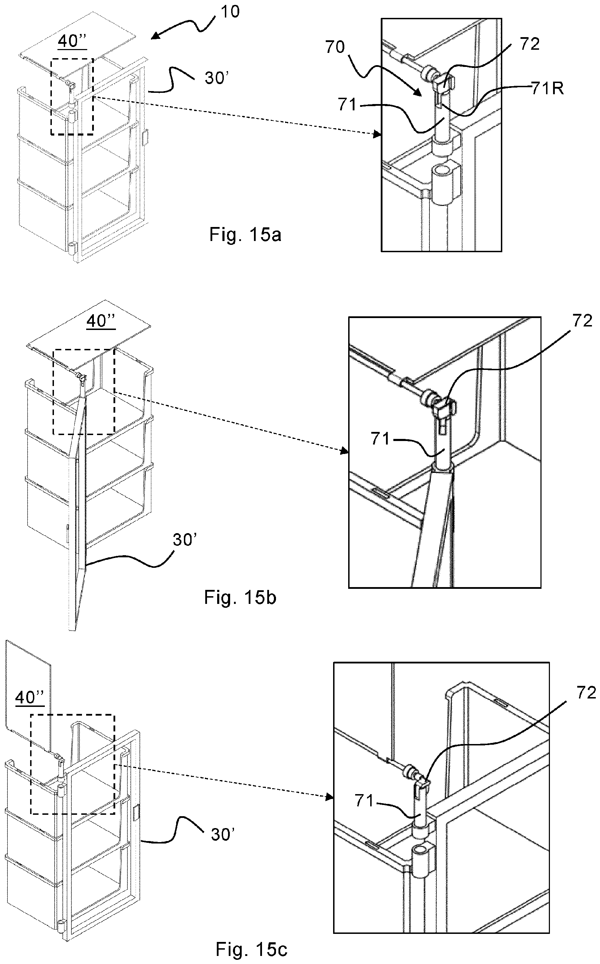

The top covers 40' are configured to interact with the door 30' so that when the door 30' is able to be opened, the top covers 40' are in the active state, preventing access for a lifting device 600. The door 30' may be blocked from being opened, i.e. not being able to be opened, for example by a lock or by an interlocking arrangement configured to prevent the door 30' from being opened when the top covers 40' are in the inactive state (as will be described later in relation to Fig. 15a-15c).

In Fig. 14, the storage column 10 of the outer left position of the row is shown with the door 30' open. A user may then pick items out of the goods holders 130 of the stack 107 in the storage volume 10V. The five other storage columns 10 to the right in Fig. 14 are shown with the door 30' closed.

In Fig. 14, the storage column 10 of the outer right position of the row is shown with the top covers 40' in inactive state, which may also be referred to as an open state. The top covers 40' are retracted by being pivoted upwardly so that they do not restrict passage for the lifting device 600 approaching from above. The top covers 40' thus allow access for the lifting device 600 into the storage volume 10V from above. The five other storage columns 10 to the left in Fig. 14 are shown with the top covers 40' in the active state, in which the covers 40' are extended to a position where they restrict passage of the lifting device 600 approaching from above, thus preventing access of the lifting device 600 into the storage volume 10V from above. When extended to active state, the top covers 40' are pivoted downwardly, about 90 degrees, compared to the inactive state.

The top covers 40' may each comprise an actuator configured to move the cover between the activate an inactive state. The actuator may be a linear or a rotary actuator powered by a motor.

The door 30' may be lockable to allow it to be in a closed and locked state, and in a closed and unlocked state. When in the closed and unlocked state, the door 30' is openable and a user may open the door 30' to gain access to the interior of the storage column 10, i.e. the storage volume 10V behind the door 30'. When in the closed and locked state, a user may not open the door 30'. This is usually the case when a lifting device 600 of a container handling device 7, such as the prior art container handling devices 201, 301, 401 of Figs. 2-4, needs access to or is operating inside the storage column 10.

Fig. 15a, Fig. 15b, Fig. 15c shows an alternative way to prevent the door 30' from being opened. It shows a side-accessible storage column 10 according to the second embodiment of the invention comprising a side-access barrier 30 in the form of a hinged door 30', and a top-access barrier 40 in the form of a pivotally movable cover 40". The cover 40" works in the same way as the two hinged covers 40' in Fig. 14, only that it is one larger cover 40 hinged at one side.

The door 30' and the top cover 40" are connected by an interlocking arrangement 70, which is shown in a detail view for each of the figures 15a, 15b, and 15c. The interlocking arrangement 70 comprises a first locking part 71 connected to the door 30' and a second locking part 72 connected to the cover 40". The first locking part 71 is configured to rotate together with the door 30' when the door' is moved between closed and open state. The second locking part 72 is configured to rotate with the cover 40" when the cover" is moved between active and inactive state. The first locking part 71 comprises a recess 71R configured to receive the second locking part 72. The recess 71R is arranged so that the second locking part 72 may engage it when the door 30' is closed, but may not engage it when the door 30' is open.

The interlocking arrangement 70 prevents movement of the door 30' from the closed to the open state when the top cover 40" is in the inactive state, i.e. open, and configured to allow movement of the door 30' between the closed and open state when the top cover 40 "is in the active state, i.e. closed.

In Fig. 15a, the door 30' is closed and the top cover 40" is in active state (extended). As can be seen in the detail view of the interlocking arrangement 70, the second locking part 72 is not engaged with the first locking part 71. Thus, door 30' is openable, as the first locking part 71 is not blocked from being rotated together with the door 30'. Furthermore, as the recess 71R is aligned with the second locking part 72, the cover 40" maybe moved to inactive state as the second locking part is allowed to rotate and engage the recess 71R.

In Fig. 15b, the door 30' is open and the top cover 40" is in active state (extended). As can be seen in the detail view of the interlocking arrangement 70, the second locking part 72 is not engaged with the first locking part 71. The first locking part 71 has rotated compared to the position in Fig. 15a. Because the recess 71R has now moved, the second locking part 72 is not allowed to rotate as it is blocked by the first locking part 71. A user may then safely access the goods inside the goods holders 130 as the cover 40" ensures that no lifting device 600 may enter at the same time.

In Fig. 15c, the door 30' is closed and the top cover 40" is in inactive state (retracted). The second locking part 72 has rotated and is engaged with the recess 71R. Thus, the second locking part 72 blocks the first locking part 71 from being rotated, and the door 30' is not openable. A lifting device may then enter and operate within the storage volume 10V.

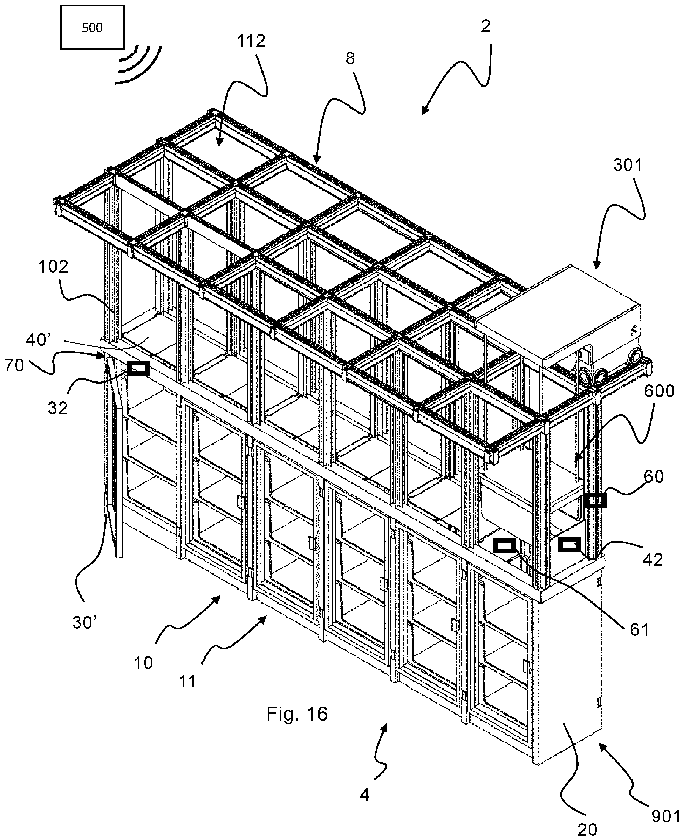

Fig. 16 is a perspective view of an automated storage and retrieval system 2 comprising a storage system 4 according to the second embodiment of the invention. A rail system 8 is overlying the storage system 4, and a container handling vehicle 301 is operating on the rail system 8. The rail system 8 may be identical to the rail system 108 described in relation to Fig. 1. The side-accessible storage columns 10 are each aligned with the access openings 112 of the rail system 8. Thus, the lifting device 600 of the container handling vehicle 301 may be lowered to the storage volume 10V of a storage column 10 by first going through the access opening 112 above the storage column 10. Upright members 102, which may be identical to the upright members 102 described in relation to Fig. 1, are arranged on top of the side accessible storage columns 10 and are aligned with the upright members 20, which may be upright panels and/or corner posts of the side-accessible storage columns 10 so that the lifting device 600 may be guided down to the top-access barrier 40 by the upright members 102, and within the storage volume 10V by the upright members 20.

In some examples, the upright members 20 of the side-accessible storage columns 10 are corner posts, which may be identical to the upright members 102 of Fig.1, running all the way up to the rail system 8, i.e. past the top-access barrier 40.

In this example of the second embodiment, Each door 30' comprises a lock 31 for locking the door 30' in a closed state. The lock 31 may be controlled by a control system 500 or by near-by sensors. For example, the door 30' may be provided with a door position sensor 32 for detecting whether the door is closed or open.

Various ways of controlling the top-access barrier 40 and the lock 31 will be described below.

### Access control by central control system

In Fig. 16, the control system 500 is configured to control movement of the top covers 40', 40" such as those described in relation not Figs. 14 and 15a to 15c between the active and inactive states. The top covers or cover 40' are active by default, and each door 30' is unlocked by default. When a lifting device 600 needs access to the storage volume 10V of a storage column 10, the control system 500 can lock a door in closed state and then move the top covers 40' to inactive state to give the lifting device 600 access. The top covers 40' may for example comprise an actuator driven by a motor controlled by the control system 500.

The control system 500 can determine when a lifting device 600 needs access to a storage column 10 within the system for example by receiving a request from the lifting device 600, or based on real-time position of the lifting device 600, or based on input received from a sensor 60 detecting the lifting device 600. Each door may be provided with a door position sensor 32 so that the control system 500 may check if the door is closed before locking the lock 31. The top covers 40' may be provided with a top-access barrier position sensor 42 so that the control system 500 may check if the top covers 40' are active or inactive.

When a customer wants to access the interior of a storage column 10, he or she may attempt to open the door 30' from the access side 11. If a lifting device 600 is operating inside the storage volume 10V, i.e. the top covers 40' are inactive, the door 30' is locked and will not open. When the lifting device 600 has moved out of the storage volume 10V, above the top covers 40', the top covers 40' are activated and the door 30' is unlocked so that the customer may open the door 30'. When a customer wants to access the interior of a storage column 10 and no lifting device 600 is operating inside the storage volume 10V at that time, the door 30' is unlocked and may be opened.

It should be understood that the control system 500 may be used similarly to control the top-access barrier 40 as described in relation to Fig. 13 and the side-access barrier 30 and the lock 31 of the first embodiment, except that the control system 500 does not need to activate the top-access barrier 40.

If a lifting device 600 is approaching an active top cover 40', e.g. after having received a command from the control system 500 to perform an operation inside the storage volume 10V of a storage column 10, the top covers 40' may only be moved to an inactive state if the door 30' is closed and locked, to ensure that no customer may open the door 30' after the top cover 40' has been moved to inactive state. If the door 30' is open when the lifting device 600 is approaching the top covers 40', the top covers 40' may not be retracted to inactive state before the door 30' has been closed by the user and locked by the control system 500.

The storage column 10 may comprise a second sensor 61 for detecting a lifting device 600 being present in the storage volume 10V, below the top-access barrier 40, 40', 40". The control system 500 may receive input from the second sensor 61 and move the top-access barrier 40' between active and inactive state in response to the input from the sensor 61. If the second sensor does not detect a lifting device 600 inside the storage volume, below the top-access barrier, the control system may activate the top-access barrier, i.e. when the lifting device has moved up passed the top-access barrier, the top-access barrier is activated by the control system.

### Local access control

Instead of controlling access centrally by a common control system 500, access control may be done locally for each storage column 10 using sensors 32, 42, 60, 61 or by allowing the container handling devices, such as those described in relation to Figs. 2-4, of the system to communicate with the lock 31 and/or the top-access barrier 40, 40', 40". This will now be described for the system 2 as shown in Fig. 16.

Each storage column 10 may comprise a first sensor 60 for detecting a lifting device 600 in proximity to the top covers 40'. The first sensor 60 may for example be a radio frequency proximity sensor arranged close to and above the top covers 40'. The proximity sensor 60 can communicate with the lock or interlock 70, and/or the door 30' (or access barrier 30 as described in relation to Fig. 13), and the top covers 40' (or access barrier 40 as described in relation to Fig 13). When the sensor 60 detects a lifting device 600 above and in proximity to the top covers 40', the sensor may communicate this to the interlock or lock 70 or the door 30' so that the door 30', is locked. The lock 70 may be configured to wait until the door is closed, e.g. based on input received from the door position sensor 32, before locking. The sensor 60 may also communicate to the top covers 40' that a lifting device 600 has been detected so that the top covers 40' are moved to inactive state. The sensor 60 may be configured to first communicate to the lock 31 or door 30' and then to the top covers 40'. The top covers 40' may be configured to communicate with the lock 31, to ensure that the top covers 40' are not moved to inactive state before the door 30' has been locked in closed state.

Alternatively, controlling the lock 70 and the top covers 40' may be used by local communication between a container handling vehicle, such as those described in relation to Figs. 2-4, or its lifting device 600, the top-covers 40', the lock 70, and the sensors 32, 42, 60. For example, the lifting device 600, when in proximity to the top covers 40', may request access to the storage volume 10V below. The request may be communicated to the top covers 40', the door 30' and the lock 70, e.g. by the lifting device 600, the container handling vehicle 301, or the top covers 40'. When the door is confirmed closed and locked by the door position sensor 32 and the lock 70, the top covers 40' will retract to give access to the lifting device 600. The lifting device may, when the operation is finished within the storage volume 10V, inform the top cover 40', and the lock 30, so that the top covers 40' may extend to active state and the lock may unlock the door 30'. Communication may also involve the first sensor 60 and the top-access barrier position sensor 42.

The top covers 40' may in some embodiments be configured to be moved to active state at a predetermined period of time t1 after having been moved to the inactive state. The predetermined period of time t1 may be set according to the expected operating time for the lifting device 600, e.g. the maximum time a lifting device 600 spends inside the storage volume 10V when retrieving or placing a target goods holder 9.

The second sensor 61 may be configured to communicate with other sensors, the lock 70, and/or the door 30' and/or the top-access barrier 40' and/or the control system 500. Thus local communication between the second sensor 61 and the lock 70 and top-access barrier 40' may be used to unlock the lock and/or to move the top-access barrier to inactive state when the lifting device 600 is no longer operating inside the storage volume 10V.

In the preceding description, various aspects of the delivery vehicle and the automated storage and retrieval system according to the invention have been described with reference to the illustrative embodiment. For purposes of explanation, specific numbers, systems and configurations were set forth in order to provide a thorough understanding of the system and its workings. However, this description is not intended to be construed in a limiting sense. Various modifications and variations of the illustrative embodiment, as well as other embodiments of the system, which are apparent to persons skilled in the art to which the disclosed subject matter pertains, are deemed to lie within the scope of the present invention.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

### List of reference numbers

- 1: Prior art automated storage and retrieval system
- 2: Automated storage and retrieval system
- 3: System
- 4: Storage system
- 5: Product items
- 7: Container handling device
- 8: First rail system
- 9: Goods holder
- 10: Side-accessible storage column
- 10V: Storage volume of side-accessible storage column
- 11: Access side of side-accessible storage column
- 20: Upright member of side-accessible storage column
- 30: Side-access barrier
- 30': Hinged door
- 32: Door position sensor
- 40: Top-access barrier
- 40': Pivotable top cover of a set
- 40": Pivotable top cover
- 42: Top-access barrier position sensor
- 50: Movable cover
- 60: First sensor
- 70: Interlocking or lock arrangement
- 71: First locking part
- 71R: Recess in first locking part 71
- 72: Second locking part
- 90: User-access area
- 100: Framework structure
- 102: Upright members of framework structure
- 104: Storage grid
- 105: Storage column
- 106: Storage container
- 106': Particular position of storage container
- 107: Stack
- 108: Rail system
- 110: Parallel rails in first direction (X)
- 111: Parallel rails in second direction (Y)
- 112: Access opening
- 115: Access station
- 119: First port column
- 120: Second port column
- 130: Side-accessible goods holder
- 131: Base
- 132: First side wall of goods holder
- 132': Second side wall of goods holder
- 132": Third side wall of goods holder
- 132‴: Fourth side wall of goods holder
- 133: Divider wall
- 134: Side-access opening
- 135: First set of goods holder gripping structures
- 136: Barrier gripping structures
- 137a: Guide for overhead sectional barrier in side-access opening
- 137b: Guide for overhead sectional barrier in top opening
- 138: Activation interface
- 140: Detachable barrier
- 141, 141': Retractable barrier on goods holder
- 142: Barrier on lifting frame
- 143: Barrier on adapter
- 144: Cylindrical core of retractable barrier 141'
- 146: Slot
- 147: Guide post
- 201: Prior art container handling vehicle
- 201a: Vehicle body of the container handling vehicle 201
- 201b: Drive means / wheel arrangement / first set of wheels in first direction (X)
- 201c: Drive means / wheel arrangement / second set of wheels in second direction (Y)
- 301: Prior art cantilever container handling vehicle
- 301a: Vehicle body of the container handling vehicle 301
- 301b: Drive means / first set of wheels in first direction (X)
- 301c: Drive means / second set of wheels in second direction (Y)
- 304: Gripping device
- 401: Prior art container handling vehicle
- 401a: Vehicle body of the container handling vehicle 401
- 401b: Drive means / first set of wheels in first direction (X)
- 401c: Drive means / second set of wheels in second direction (Y)
- 404: Gripping device
- 404a: Lifting band
- 404b: Gripper
- 404c: Guide pin
- 404d: Lifting frame
- 500: Control system
- 600, 600': Lifting device
- 601, 601': Lifting frame
- 602: Set of adapter gripping elements
- 604: Lifting band
- 605: First set of gripping elements of lifting device
- 606: Second set of gripping elements of lifting device
- 620: Adapter
- 625: Set of adapter gripping structures on adapter 620
- 701: Gantry crane
- 800: Storage section
- 900: User-accessible retail section
- 901: Row of storage columns
- X: First direction
- Y: Second direction
- Z: Third direction

## Claims

1. A storage system (4) comprising one or more side-accessible storage columns (10), each storage column (10) defining a storage volume (10V) for accommodating a stack (107) of goods holders (9), wherein each column (10) is configured for guiding vertical movement of the goods holders (9) into and out of the storage column (10) by a lifting device (600), wherein
each of the storage columns (10) comprises an access side (11), a side-access barrier (30, 30'), and a retractable top-access barrier (40, 40', 40"), wherein
the side-access barrier (30, 30') is configured to allow access into the storage volume (10V) from the access side (11) when open, and to prevent access into the storage volume (10V) from the access side (11) when closed, and wherein
the top-access barrier (40, 40', 40") is configured to be in an active state in which it is extended, and in an inactive state in which it is retracted, wherein the top-access barrier (40) is configured to prevent access of the lifting device (600) into the storage volume (10V) from above when in active state, and to allow access of the lifting device (600) into the storage volume (10V) from above when in inactive state, and wherein
the top-access barrier (40, 40', 40") is configured so that,
when the side-access barrier (30, 30') is able to be opened, the top-access barrier (40, 40', 40") is in the active state or the top-access barrier (40, 40', 40") is moved to the active state in response to opening the side-access barrier (30, 30').

2. A storage system (4) according to claim 1, wherein moving the top-access barrier (40) into its inactive state causes the side-access barrier (30) to close, preventing access to the storage volume (10V) via the side access opening (11), and/or wherein moving the top-access barrier (40) into its active state causes the side-access barrier (30) to open, allowing access to the storage volume (10V) via the side access opening (11).

3. A storage system (4) according to claim 1 or 2, wherein the side-access barrier (30) and the top-access barrier (40) are sections of a moveable cover (50), wherein the movable cover (50) is configured to be moved between at least a first position (50A) and a second position (50B), wherein
when in the first position (50A) the movable cover (50) prevents access into the storage volume (10V) from the access side (11) and allows access from above, and wherein
when in the second position (50B) the movable cover (50) allows access into the storage volume (10V) from the access side (11) and prevents access from above.

4. A storage system (4) according to any preceding claim, wherein, when the top-access barrier (40', 40") is moved into its inactive state, the side-access barrier (30') cannot be moved to allow access to the storage volume (10V) via the side access opening (11), and/or wherein, when the top-access barrier (40', 40") is moved into its active state, the side-access barrier (30') is moveable, to allow access to the storage volume (10V) via the side access opening (11).

5. The storage system (4) according to any preceding claim, wherein, when the side-access barrier (30') is in the open state, the top-access barrier (40', 40") cannot be moved into its inactive state.

6. The storage system (4) according to any of claims 1 to 5, wherein the side-access barrier (30') and the top-access barrier (40', 40") are connected by a interlocking arrangement (70), the interlocking arrangement (70) being configured to:
block movement of the side-access barrier (30') from the closed to the open state when the top-access barrier (40', 40") is in the inactive state;
and/or configured to allow movement of the side-access barrier (30') between the closed and open state when the top-access barrier (40', 40") is in the active state;
and/or block movement of the top-access barrier (40', 40") into inactive state when the side-access barrier (30') is in the open state.

7. The storage system (4) according to any of the preceding claims, wherein the side-access barrier (30, 30') comprises a lock (31) for locking the side-access barrier in a closed state, and wherein the side-access barrier (30, 30') is configured to be locked when a lifting device (600) is operating within the storage volume (10V).

8. The storage system (4) according to any of the preceding claims, comprising a control system (500) configured to control movement of the top-access barrier (40, 40', 40") between the active and inactive state and/or to control locking and unlocking of the lock (31) of the side-access barrier (30, 30').

9. The storage system (4) according to claim 8, wherein the control system (500) is configured to control locking and unlocking of the side-access barrier (30, 30') based on at least one of:
the status of the side-access barrier (30, 30'),
the status of the top-access barrier (40, 40', 40"), and
whether a lifting device needs access to the storage volume (10V) of one of the storage columns (10).

10. The storage system (4) according to any of the preceding claims, wherein the storage columns (10) each comprises a first sensor (60) for detecting a lifting device (600) in proximity to the top-access barrier (40, 40', 40").

11. The storage system (4) according to any of the previous claims, wherein the top-access barrier (40, 40', 40") is configured to be moved to the active state at a predetermined period of time (t1) after having been moved to the inactive state.

12. The storage system (4) according to any of the previous claims, comprising at least two storage rows (901), wherein each row comprises a plurality of side-accessible storage columns (10), and wherein the system (4) comprises a user access area (90) between the at least two rows (901).

13. The storage system (4) according to any of the preceding claims, wherein at least one of the storage columns (10) comprises two or more side-access barriers (30'), each side-access barrier (30') configured to allow access into the storage volume (10V) of the at least one storage column (10) from a respective section of the access side (11) when open, and to prevent access into the storage volume (10V) from said section of the access side (11) when closed, and wherein the top-access barrier (40', 40") of the at least one storage column (10) is configured so that when at least one of the side-access barriers (30') is able to be opened, the top-access barrier (40', 40") is in the active state.

14. An automated storage and retrieval system (2) comprising:
- a storage system (4) according to any of the claims 1-17;
- a first rail system (8) overlying the storage system (4);
- a container handling device (201, 301, 401, 701) operable on the first rail system (8), the container handling device (201, 301, 401, 701) comprising a vertically displaceable lifting device (600) for being suspended from the container handling device (201, 301, 401, 701), said lifting device (600) being configured for lowering goods holders (9) to or raising the goods holders (9) from a storage position of the side-accessible storage column (10) and/or for holding said goods holder (9) while the container handling device (201, 301, 401, 701) is moving along the rails of the first rail system (8).

15. A method for providing access to a side-accessible storage column (10) of a system (4) according to any of the claims 1 to 14, the method comprising activating the top-access barrier (40, 40', 40") while the side-access barrier (30, 30') is open.
